# EUROPEAN PATENT APPLICATION

(11) **EP 4 745 738 A1**
(43) Date of publication of application: **20.05.2026**
(21) Application number: 24867124.0
(22) Date of filing: 02.08.2024
(51) Int. Cl.: G06F 3/04817, G06F 9/451

(54) **METHOD FOR DISPLAYING INTERACTIVE WALLPAPER AND RELATED APPARATUS**

(30) Priority: 19.09.2023 CN 202311218561
(71) Applicant: Honor Device Co., Ltd., Shenzhen, Guangdong 518040 (CN)
(72) Inventor: WANG, Yuanyuan, Shenzhen, Guangdong 518040 (CN); LIN, Chen, Shenzhen, Guangdong 518040 (CN); YANG, Zhuolin, Shenzhen, Guangdong 518040 (CN); LI, Jilong, Shenzhen, Guangdong 518040 (CN); THAM, LeckPeng, Shenzhen, Guangdong 518040 (CN)
(74) Representative: Isarpatent
(86) International application number: PCT/CN2024/109366
(87) International publication number: WO 2025/060707

(57) **Abstract**

This application provides a method for displaying an interactive wallpaper and a related apparatus. In this method, an electronic device may set an interactive wallpaper displayed in a screen-locked and screen-off state. The electronic device may determine, based on a user operation and sensor data, whether to change a state of the interactive wallpaper. In this way, the user not only can set the interactive wallpaper based on preference of the user, but also can operate on the interactive wallpaper, to increase interest.

## Description

This application claims priority to Chinese Patent Application No. 202311218561.4, filed with the China National Intellectual Property Administration on September 19, 2023 and entitled "METHOD FOR DISPLAYING INTERACTIVE WALLPAPER AND RELATED APPARATUS", which is incorporated herein by reference in its entirety.

### TECHNICAL FIELD

This application relates to the field of computer technologies, and in particular, to a method for displaying an interactive wallpaper and a related apparatus.

### BACKGROUND

An electronic device may include a screen-locked state and an unlocked state. When the electronic device is in the screen-locked state, the electronic device may be further in a screen-on state or a screen-off state. In other words, the screen-locked state of the electronic device may be a screen-locked and screen-on state or a screen-locked and screen-off state.

Currently, in related technologies, in the screen-off state, the electronic device may display an image in a local area of a display by using an always on display (AOD, Always On Display) technology, to facilitate the user in quickly obtaining information, and images displayed under some AODs may further change with data or operation received by the electronic device.

### SUMMARY

Implementations of this application provide a method for displaying an interactive wallpaper and a related apparatus. Various interactive wallpapers may be disposed, to fully meet personalized requirements of users. In addition, an electronic device in a screen-locked and screen-off state may also be enabled to display an interactive wallpaper.

According to a first aspect, an embodiment of this application provides a method for displaying a wallpaper, applied to an electronic device, where the electronic device includes a display, the display includes a main screen and a back screen, the main screen is connected to the back screen by using a folding component, and the method includes: when the electronic device is in a folded state and when the electronic device is detected to be screen-off, displaying a first wallpaper on the back screen, where the first wallpaper includes a first element in a first form, and both the main screen and the back screen face outside of the electronic device in the folded state; and when a first operation on the back screen is detected, switching the first element in the first wallpaper from the first form to a second form.

In some implementations, an interactive wallpaper may be referred to as the first wallpaper.

In the foregoing method, various interactive wallpapers may be disposed, to fully meet personalized requirements of users. In addition, an electronic device in a screen-locked and screen-off state may also be enabled to display an interactive wallpaper, to achieve more aesthetic affect. In addition, the user may also operate the interactive wallpaper and observe a change of the interactive wallpaper, making the process of using the electronic device more interesting for the user.

With reference to the first aspect, in some implementations, a form of the first element includes any one or more of the following: a position, a size, a color, a shape, and a movement state.

In this way, when displaying the interactive wallpaper, the electronic device can present changes of a plurality of elements, to achieve more aesthetic effect.

With reference to the first aspect, in some implementations, the method further includes: after first duration, controlling, by the electronic device, the back screen to be black, where the first duration is a sum of duration in which the first wallpaper including the first element in the first form is displayed and duration in which the first wallpaper including the first element in the second form is displayed, or the first duration is the duration in which the first wallpaper including the first element in the first form is displayed.

In some implementations, duration set by the electronic device to display the interactive wallpaper may be referred to as the first duration.

In this way, the electronic device can set time in which the interactive wallpaper is displayed, so that not only display of the interactive wallpaper can be ensured, but also excessive time in which the interactive wallpaper is displayed can be avoided to avoid excessive consumption of electricity.

With reference to the first aspect, in some implementations, after switching the first element in the first wallpaper from the first form to the second form, the method further includes: when a third operation on the back screen is detected, switching the first element in the first wallpaper from the second form to a third form.

In this way, when displaying the interactive wallpaper, the electronic device can respond to a user operation for a plurality of times, and can change a state of the displayed interactive wallpaper for a plurality of times. This is more interesting.

With reference to the first aspect, in some implementations, the first wallpaper further includes a first icon, and after displaying the first wallpaper on the back screen, the method further includes: detecting a second operation on the first icon; and displaying a first prompt box on the back screen, where information included in the first prompt box is provided by an application indicated by the first icon.

In this way, in some specific styles of interactive wallpapers, related information provided by applications installed on the electronic device can also be observed. When the electronic device is in a screen-locked state, a user can more conveniently observe related information provided by some applications.

With reference to the first aspect, in some implementations, the application indicated by the first icon is a social application, and the information included in the first prompt box includes one or more of the following: chat content and a chat participant name; or the application indicated by the first icon is a clock application, and the information included in the first prompt box includes one or more of the following: clock information and date information; or the application indicated by the first icon is a music application, and the information included in the first prompt box includes one or more of the following: song information, singer information, a playback control, and a song switching control.

More information may also be included in addition to the foregoing information. In this way, in the screen-locked state of the electronic device, the user can more conveniently observe related information provided by some applications.

With reference to the first aspect, in some implementations, the first icon included in the first wallpaper is set by a user or the electronic device.

In this way, the user can also change an icon displayed in the interactive wallpaper.

With reference to the first aspect, in some implementations, after displaying the first prompt box, the method further includes: when an operation on the first prompt box is detected, displaying a first lock screen interface on the main screen, and displaying a second lock screen interface on the back screen or controlling the back screen to be black; and when an unlock operation is detected on the main screen, displaying a first user interface on the main screen, where the first user interface belongs to the application indicated by the first icon.

In this way, when an interactive wallpaper is displayed, the electronic device can respond to a user operation on the first prompt box, to enter a corresponding application interface more conveniently.

With reference to the first aspect, in some implementations, the method further includes: when a double tap operation on an area that is other than icons and prompt boxes and that is on the back screen is detected, displaying a first lock screen interface on the main screen, and displaying a second lock screen interface on the back screen, or controlling, by the electronic device, the back screen to be black; and when an unlock operation is detected on the main screen, displaying a second user interface on the main screen, where the second user interface is a user interface displayed before the electronic device is detected to be screen-off.

In this way, when an interactive wallpaper is displayed, the electronic device can switch to a screen-locked and screen-on state, and can further switch to a screen-unlocked and screen-on state subsequently.

With reference to the first aspect, in some implementations, the first wallpaper further includes a second icon, and after displaying the first prompt box, the method further includes: when a tap operation on the second icon is detected, stopping displaying the first prompt box; and displaying a second prompt box, where information included in the second prompt box is provided by an application indicated by the second icon.

With reference to the first aspect, in some implementations, after displaying the first prompt box, the method further includes: when an operation on an area that is other than icons and that is on the back screen is detected, stopping displaying the first prompt box.

In this way, the electronic device can further cancel the first wallpaper in which the first prompt box is displayed, and recover the first wallpaper in the previous state.

With reference to the first aspect, in some implementations, when the electronic device is in the folded state and before the electronic device is detected to be screen-off, the method further includes: when the electronic device is detected to be unlocked and screen-on, displaying a third user interface on the main screen; detecting a screen lock operation; and when the electronic device is detected to be screen-locked and screen-on, displaying the first lock screen interface on the main screen, and displaying the second lock screen interface on the back screen, or controlling, by the electronic device, the back screen to be black.

With reference to the first aspect, in some implementations, the method further includes: when the electronic device is detected to be screen-off, displaying a second wallpaper on the back screen, where the second wallpaper includes a second element of a first color; and when ambient light is detected to be of a second color, switching the second element in the second wallpaper from the first color to the second color.

In this way, the electronic device can obtain a change of the ambient light color by using a sensor, to change the color of the interactive wallpaper, so that the color of the interactive wallpaper is consistent with the ambient light color, and interest is increased.

With reference to the first aspect, in some implementations, after displaying the second wallpaper in the second state on the back screen, the method further includes: when the electronic device is detected to be screen-off, displaying a third wallpaper on the back screen, where the third wallpaper includes a third element located at a first position; and when a posture of the electronic device is detected to change, switching the third element in the third wallpaper from the first position to a second position.

In this way, the electronic device can obtain a change of a posture of the electronic device by using a sensor, to change the position of an element in the interactive wallpaper, so that the position of the element in the interactive wallpaper is consistent with a change of a posture of the electronic device, and interest is increased.

With reference to the first aspect, in some implementations, when the first wallpaper is displayed on the back screen, the method further includes: displaying the first wallpaper or a fourth wallpaper on the main screen.

In this way, the electronic device can be set to display the interactive wallpaper also on the main screen.

With reference to the first aspect, in some implementations, a desktop of the electronic device includes a first card, the first card includes the first control, and the method further includes: when the electronic device is in the folded state, turning off, by the electronic device, the screen in response to an operation on the first control, and displaying the first wallpaper on the back screen.

In this way, the electronic device can display the interactive wallpaper more conveniently by using the card on the desktop.

With reference to the first aspect, in some implementations, after turning off, by the electronic device, the screen in response to the operation on the first control, and displaying the first wallpaper on the back screen, the method further includes: when the first function is disabled and the electronic device is in the folded state and when the electronic device is detected to be screen-off, skipping displaying, by the electronic device, the first wallpaper on the back screen; and when the first function is enabled and the electronic device is in the folded state and when the electronic device is detected to be screen-off, displaying, by the electronic device, the first wallpaper on the back screen.

In this way, when the electronic device does not enable a function of displaying the interactive wallpaper, the electronic device may also enter the screen-locked state by using the card on the desktop, to display the interactive wallpaper.

With reference to the first aspect, in some implementations, after displaying the first wallpaper on the back screen, the method further includes:
when a second function is enabled and after first duration, stopping displaying, by the electronic device, the first wallpaper on the back screen, and displaying content corresponding to the second function on the back screen or the main screen; and when the second function is disabled and after first the duration, stopping displaying, by the electronic device, the first wallpaper on the back screen, and controlling the back screen to be black.

In this away, after time in which the interactive wallpaper is displayed reaches set time, the electronic device may further display a screen-off wallpaper when a screen-off function is enabled, and may alternatively not display the screen-off wallpaper when the always on display function is not enabled.

With reference to the first aspect, in some implementations, the method further includes: when the electronic device is in an unfolded state and when the electronic device is detected to be screen-off, skipping displaying the first wallpaper on the back screen, where the main screen and the back screen face a same direction in the unfolded state.

In this way, the electronic device can display the interactive wallpaper only in the folded state, and does not display the interactive wallpaper in the unfolded state.

In some implementations, the first function may be a function of displaying the interactive wallpaper, and the second function may be a function of displaying an AOD.

According to a second aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the method according to any one of the first aspect and the implementations of the first aspect.

According to a third aspect, an embodiment of this application provides a computer storage medium, including computer instructions. When the computer instructions are run on an electronic device, the electronic device is enabled to perform the method according to any one of the first aspect and the implementations of the first aspect.

### BRIEF DESCRIPTION OF DRAWINGS

FIG. 1A is a diagram of an electronic device in an unfolded state according to an embodiment of this application;
FIG. 1B is a diagram of an electronic device in a folded state according to an embodiment of this application;
FIG. 2A to FIG. 2F are user interfaces for setting an interactive wallpaper according to an embodiment of this application;
FIG. 3A to FIG. 3I are user interfaces for displaying an interactive wallpaper according to an embodiment of this application;
FIG. 4A to FIG. 4J are user interfaces for setting an interactive wallpaper according to an embodiment of this application;
FIG. 5A to FIG. 5I are user interfaces for displaying an interactive wallpaper according to an embodiment of this application;
FIG. 6 is a schematic flowchart of a method for displaying an interactive wallpaper according to an embodiment of this application;
FIG. 7 is a schematic diagram of a hardware architecture of an electronic device according to an embodiment of this application; and
FIG. 8 is a diagram of a software architecture of an electronic device according to an embodiment of this application.

### DESCRIPTION OF EMBODIMENTS

The technical solutions in embodiments of this application are clearly described in detail below with reference to the accompanying drawings. In the descriptions of embodiments of this application, unless otherwise stated, "/" represents the meaning of "or". For example, A/B may represent A or B. "And/or" in the text merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

Hereinafter, the terms "first" and "second" are used only for descriptive purposes, and cannot be understood as indicating or implying relative importance or implicitly indicating a quantity of indicated technical features. Therefore, a feature limited by "first" and "second" may explicitly or implicitly include one or more features. In the descriptions of embodiments of this application, unless otherwise stated, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be recognized by the user. The user interface is usually represented in a form of a graphical user interface (graphic user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display of the electronic device.

For ease of understanding the solutions provided in embodiments of this application, the following describes related concepts in embodiments of this application.

Screen lock may be locking a screen of an electronic device, to prevent false touch, accidental touch, or others from using the electronic device of the user. In a screen-locked and screen-off state, the user cannot use the electronic device, or, if audio content is played before the screen is locked, the user can only listen to the audio content; or, in a screen-locked and screen-on state, the user can only browse some information or enable specific functions such as the camera and flashlight. The electronic device needs to be unlocked by using an unlocking manner set by the user, so that the user can normally use the electronic device. The screen-locked and screen-off state may also be referred to as a screen-locked and screen-off state, and the screen-locked and screen-on state may also be referred to as a screen-locked and screen-on state.

The screen-locked and screen-off state may mean that, in response to a screen lock operation, the electronic device switches to a state in which the screen is locked and the screen is turned off. The screen lock operation may include but is not limited to: a press operation on a screen lock button on a side edge or a top edge of the electronic device, a tap operation on a screen lock control in a user interface, a voice instruction, a gesture instruction, and the like.

The screen-locked and screen-on state may mean that, when the electronic device is in the screen-locked and screen-off state, in response to a screen-on operation, the electronic device switches to a state in which the screen is locked and the screen is lit up. The screen-on operation may include but is not limited to: an operation of double tapping the screen, an operation of lifting the electronic device, and the like. In some implementations, the electronic device may set duration of the screen-locked and screen-on state in response to a user operation. Specifically, in response to the screen-on operation, the electronic device switches to the screen-locked and screen-on state and lasts for specific time (for example, 10s). Then, the electronic device switches to the screen-locked and screen-off state.

An unlocked and screen-on state may mean that, when the electronic device is in the screen-locked and screen-off state or the screen-locked and screen-on state, in response to an unlock operation, the electronic device switches to a state in which the screen is unlocked and the screen is lit up. The unlock operation may include but is not limited to: a touch operation on a specific area (such as a fingerprint recognition area), a face unlock operation facing the camera, an operation of entering a password (such as an alphabetic and/or numeric password or a graphic password), and the like. In a possible implementation, the first two operations mentioned above can be implemented when the electronic device is in the screen-locked and screen-off state or the screen-locked and screen-on state, and the last operation can be implemented only when the electronic device is in the screen-locked and screen-on state.

A wallpaper may be a picture displayed on an entire screen of the electronic device. Wallpapers may include a screen lock wallpaper, a desktop wallpaper, a screen-off wallpaper, and an interactive wallpaper. The wallpaper may include pictures preset by the electronic device, and may also include pictures stored in an album of the electronic device.

The screen lock wallpaper may be displayed when the electronic device is in the screen-locked and screen-on state, the desktop wallpaper may be displayed when the electronic device is in the unlocked and screen-on state, the screen-off wallpaper may be displayed when the electronic device is in the screen-locked and screen-off state, and the interactive wallpaper may also be displayed when the electronic device is in the screen-locked and screen-off state. It should be noted that, the electronic device may display the screen-off wallpaper when the always on display (always on display, AOD) function is enabled. The AOD function is a function of the electronic device to display time, date, icons and other information in some areas of the screen without lighting up the entire screen (that is, the electronic device maintains low power consumption). However, the foregoing interactive wallpaper in this application is the wallpaper displayed on the main screen and/or the entire back screen under the premise that the electronic device lights up the entire main screen and/or the entire back screen, and the current electronic device is not in a low power consumption state. In other words, a display mechanism of the screen-off wallpaper is different from that of the interactive wallpaper.

The following first describes a structural form of the electronic device provided in this embodiment of this application.

The electronic device provided in this embodiment of this application is an electronic device with an outward foldable screen. The outward foldable screen may mean that the user can observe the screen after folding, that is, the screen after folding faces outward. A screen after an inward foldable screen is folded faces inward and is hidden, and the user cannot observe the screen after folding.

A main screen and a side area of an electronic device with an outward foldable screen may be connected by using a first folding component, and a back screen and the side area of the electronic device with the outward foldable screen may be connected by using a second folding component.

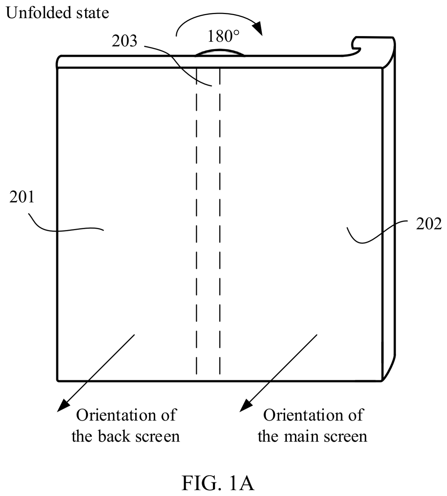

FIG. 1A shows an example of a structural form of an electronic device in an unfolded state.

As shown in FIG. 1A, the electronic device may include but is not limited to: a back screen 201, a main screen 202, and a side area 203. The back screen 201, the main screen 202, and the side area 203 may be referred to as an entire screen. When the electronic device is in the unfolded state, an angle between the back screen 201 and the main screen 202 may be 180 degrees or approximately 180 degrees. The entire screen of the electronic device faces a same direction as the back screen 201 and the main screen 202. To be specific, the main screen and the back screen that are shown in FIG. 1A face a same direction. Further, the main screen, the side area, and the back screen all face the same direction.

When a user faces the entire screen, a display area that can be observed by the user is the entire screen. In a possible implementation, a back surface of a plane in which the entire screen in the electronic device is located does not include a display. In another possible implementation, the back surface of the plane in which the entire screen in the electronic device is located includes a display. In this embodiment of this application, an example in which the back surface of the plane in which the entire screen in the electronic device is located does not include a display is used for description.

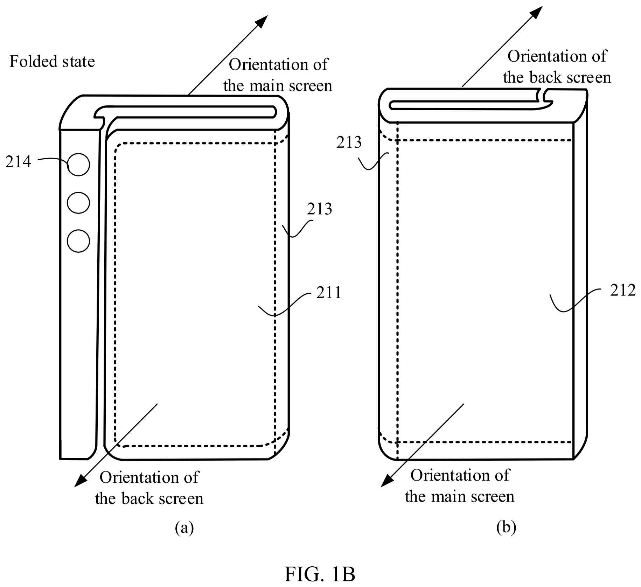

FIG. 1B shows an example of a structural form of an electronic device in a folded state.

As shown in FIG. 1B, (a) and (b) are structural forms of the electronic device in the folded state that are observed from different directions. (a) is a diagram of a structural form of the electronic device observed from the back surface, and (b) is a diagram of a structural form of the electronic device observed from the front surface. In this embodiment of this application, the front surface and the back surface are only examples for description, and only indicate that an observation angle between the two is 180 degrees. This is not limited herein.

The electronic device may include but is not limited to: a back screen 211, a main screen 212, and a side area 213. When the electronic device is in the folded state, an angle between the back screen 201 and the main screen 202 may be 0 degrees or approximately 0 degrees. Optionally, the electronic device may further include a camera 214, where the camera 214 and the back screen 211 are located on a same surface in the folded state. An orientation of the camera 214 does not change as the electronic device is folded or unfolded.

In (a), the orientation of the back screen and the orientation of the main screen are shown in (a). When facing the back screen 211, the user can observe the back screen 211, but cannot observe the main screen. In (b), the orientation of the back screen and the orientation of the main screen are shown in (b). When facing the main screen 212, the user can observe the main screen 212, but cannot observe the back screen. In other words, when the electronic device is in the folded state, the main screen and the back screen face opposite directions, and an angle between the orientation of the side area and the orientation of the main screen is 90 degrees or approximately 90 degrees, and an angle between the orientation of the side area and the orientation of the back screen is also 90 degrees or approximately 90 degrees.

In this embodiment of this application, the structural forms of the electronic device shown in FIG. 1A and FIG. 1B are described only by using examples, and the electronic device may further include more or fewer structures. This is not limited herein.

In some implementations, in the screen-locked and screen-on state, the electronic device may display a screen lock wallpaper on the back screen and/or the main screen. In the unlocked and screen-on state, the electronic device may also display a desktop wallpaper on the back screen and/or the main screen.

In this embodiment of this application, after switching to the screen-locked and screen-off state, the electronic device may display the interactive wallpaper on the back screen, where the interactive wallpaper is different from the screen lock wallpaper and the desktop wallpaper. In other words, when the electronic device sets the screen lock wallpaper and the desktop wallpaper, the electronic device may also be provided with the interactive wallpaper.

With reference to user interfaces, the following describes a method for displaying an interactive wallpaper according to an embodiment of this application.

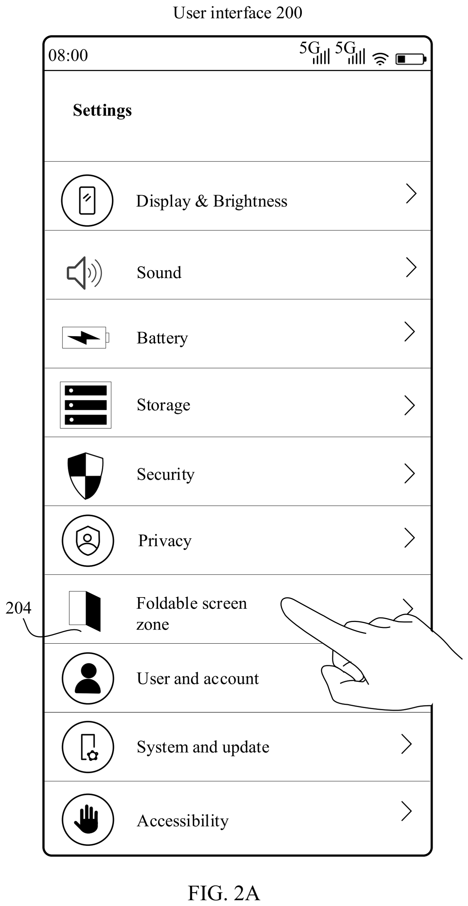

FIG. 2A to FIG. 2F show related user interfaces for setting an interactive wallpaper according to an embodiment of this application.

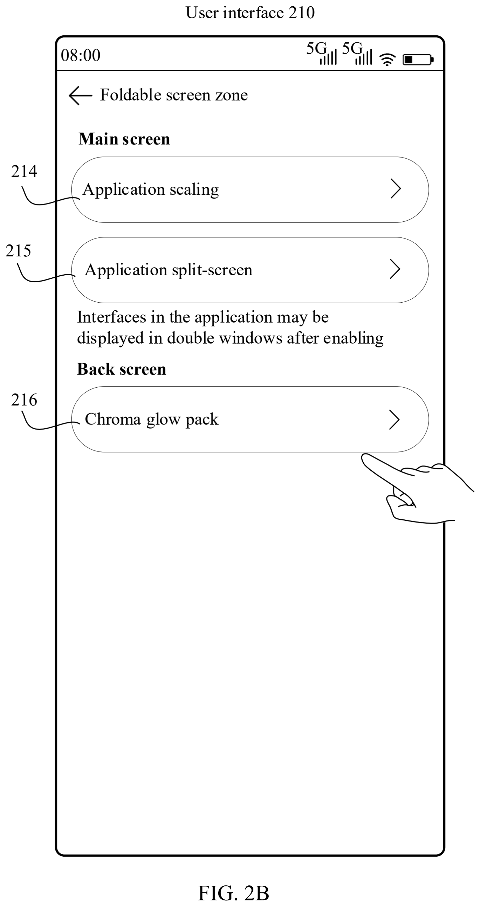

As shown in FIG. 2A, a user interface 200 is a user interface provided for a setting application of the electronic device. The electronic device may display a user interface 200 in response to an operation of the user on a setting icon in the desktop. The user interface 200 may include a plurality of function bars, such as a foldable screen zone bar 204. In response to a tap operation on the foldable screen zone bar 204, the electronic device may display a user interface 210 shown in FIG. 2B.

As shown in FIG. 2B, the user interface 210 is a user interface used by the electronic device to set a foldable screen related function. The user interface 210 may include but is not limited to an application scaling control 214, an application split-screen control 215, and a chroma glow pack control 216. Optionally, the user interface 210 may further include a personalized back screen and a side display control, where the electronic device may set a back screen screen lock wallpaper in response to an operation on the personalized back screen and the side display control. This is not described in detail in this embodiment of this application. As shown in FIG. 2B, the electronic device may display a user interface 220 in response to a tap operation on the chroma glow pack control 216.

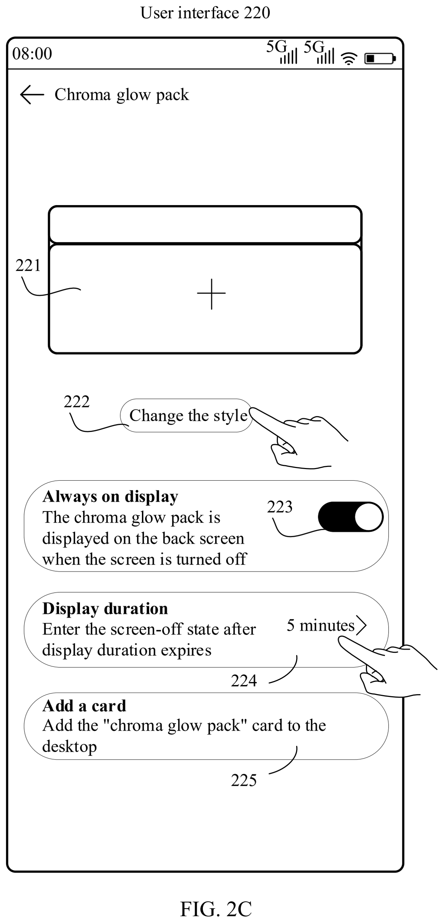

As shown in FIG. 2C, the user interface 220 is a user interface provided by the electronic device for setting chroma glow pack. The chroma glow pack may be understood as the foregoing interactive wallpaper. The user interface 220 may include but is not limited to a back screen preview area 221, a style change control 222, a slide control 223, a display duration control 224, and a card add control 225.

The back screen preview area 221 may be used to display a style of the interactive wallpaper set by the electronic device for the back screen, for the user to preview the style. In a possible implementation, if the user has set the interactive wallpaper before tapping the chroma glow pack control 216, when the user interface 220 is displayed in response to the operation of tapping the chroma glow pack control 216 by the user, the back screen preview area 221 may display the style of the previously set interactive wallpaper.

The electronic device may enable or disable an interactive wallpaper display function in response to a tap operation on the slide control 223. Enable of the interactive wallpaper display function may mean that the electronic device may display the interactive wallpaper based on set display duration after switching to the screen-locked and screen-off state, or may receive an operation of the user on the back screen when the interactive wallpaper is displayed, to change the style of the displayed interactive wallpaper. Optionally, when the interactive wallpaper display function is enabled, the electronic device may further display prompt information, where the prompt information is used to inform the user that if the interactive wallpaper display function is enabled, the interactive wallpaper is displayed each time after the screen is turned off, but power consumption and heat generation of the electronic device are increased to some extent, to further determine whether the user determines to enable the function. Disable of the interactive wallpaper display function may mean that the electronic device does not display the interactive wallpaper after switching to the screen-locked and screen-off state. If the user sets to enable the AOD, the AOD is displayed after the user switches to the screen-locked and screen-off state. If the user sets to disable the AOD, after switching to the screen-locked and screen-off state, the electronic device keeps screen-off, and content is not displayed. A manner of setting to enable or disable the AOD is described in detail below.

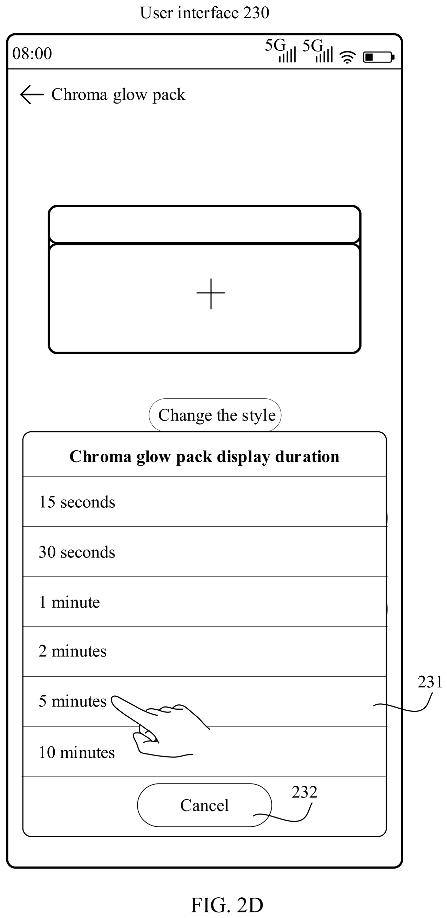

The display duration control 224 may be used to set duration in which the interactive wallpaper is displayed. For example, the electronic device may display a user interface 230 in response to a tap operation on the duration display control 224. In a possible implementation, the electronic device may preset duration (for example, 5 minutes) in which the interactive wallpaper is displayed and a condition for displaying the interactive wallpaper (for example, power is not less than 20%). In this embodiment of this application, the electronic device may preset other display duration and display conditions. This is not limited. As shown in FIG. 2D, the user interface 230 is a user interface provided by the electronic device for setting chroma glow pack display duration. The user interface 230 may include but is not limited to: a plurality of duration controls, such as a duration control 231, and a cancel control 232. For example, in response to a tap operation on the duration control 231, the electronic device may set duration in which the interactive wallpaper is displayed to 5 minutes. In other words, after displaying the interactive wallpaper for 5 minutes, the electronic device no longer displays the interactive wallpaper, and may display a black screen or a turned-off screen until the electronic device switches to the screen-locked and screen-off state from another state next time, and displays the interactive wallpaper for 5 minutes again. The cancel control 232 may indicate to cancel the display duration set this time, and display the interactive wallpaper based on the previously set display duration.

The card add control 225 is used to add a "chroma glow pack" card to the desktop. The electronic device may display the following user interface 400 in response to an operation on the card add control 225. Details of the user interface 400 are not described herein.

The electronic device may display a user interface 240 in response to a tap operation on the style change control 222.

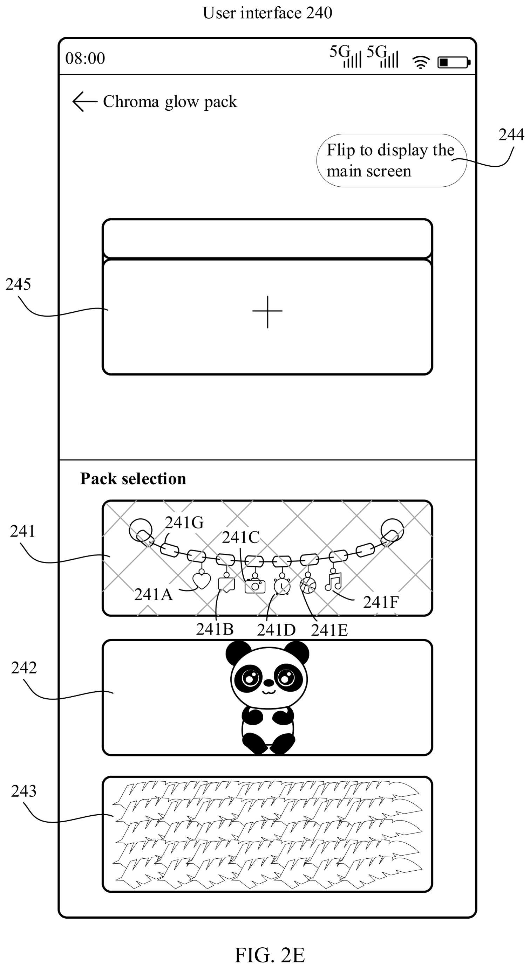

As shown in FIG. 2E, the user interface 240 is a user interface provided by the electronic device for setting chroma glow pack styles. The user interface 240 may include but is not limited to: a style 241, a style 242, a style 243, and a back screen preview area 245. The back screen preview area 245 is used to preview the style of the set interactive wallpaper displayed on the back screen. For example, during first use by the user, the style is not determined currently, and no specific style is displayed on the back screen preview area 245. As described above, if the interactive wallpaper is set previously, the style of the previously set interactive wallpaper is displayed. After the user selects a new interactive wallpaper, the style of the interactive wallpaper displayed in the preview area is updated in response to a selection operation of the user.

Optionally, the electronic device may display more styles in response to an upward-slide operation on a "pack selection" area at the lower part of the user interface 240.

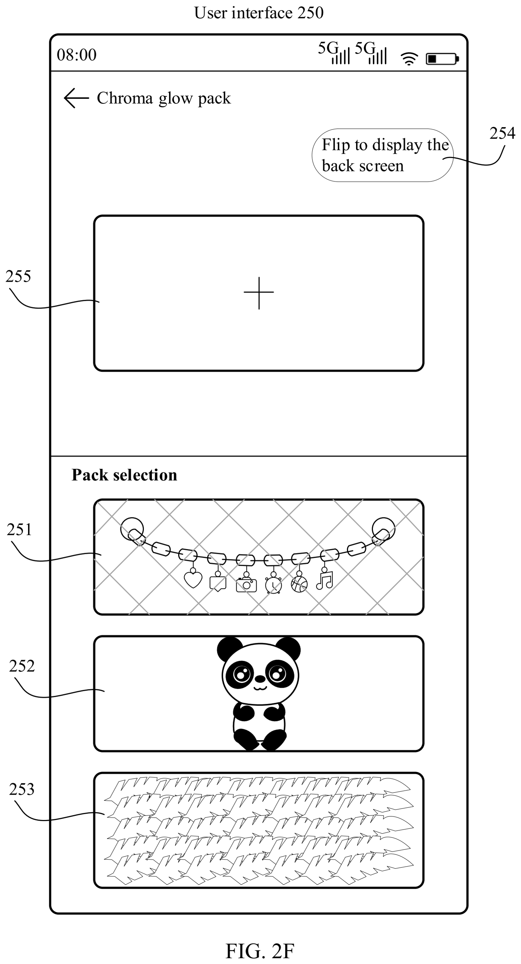

Optionally, the user interface 240 of the electronic device may further include a control 244. For example, the control 244 display text content "flip to display the main screen". In response to a tap operation on the control 244, the electronic device may display a user interface 250 shown in FIG. 2F, and set the style of the interactive wallpaper displayed on the main screen.

For example, the style 241 is a handbag style, the style 241 may include but is not limited to an icon 241A, an icon 241B, an icon 241C, an icon 241D, an icon 241E, and an icon 241F, and the style 241 may further include a chain 241G. The icon 241A may indicate an add-to-favorites function in a system application, the icon 241B may indicate a social application, the icon 241C may indicate a camera application, the icon 241D may indicate a clock application, the icon 241E may indicate a sports application, and the icon 241F may indicate a music application. In this embodiment of this application, the electronic device may change icons included in the style 1 in response to a user operation, for example, an icon indicating a weather application and an icon indicating a note application. This is not limited.

The style 242 is a panda style, where the panda is posed with both hands raised, both legs curled inward, and the mouth corners upward.

The style 243 is a feather style, and the feathers are spread out naturally in posture.

Optionally, the electronic device may further include more styles. For example, a water flow style, a multi-ball style, a color change style, and the like. This is not limited.

In the user interface 240, the electronic device may set the interactive wallpaper of the back screen to the wallpaper of the style 241 or the wallpaper of the style 242 or the wallpaper of the style 243 in response to a tap operation on the style 241, the style 242, or the style 243. After the interactive wallpaper of the back screen is set, the electronic device may display the wallpaper of the style 241 or the wallpaper of the style 242, or the wallpaper of the style 243 in the back screen preview area 245. In the user interface 250, the electronic device may set the interactive wallpaper of the main screen to the wallpaper of the style 241 or the wallpaper of the style 242 or the wallpaper of the style 243 in response to a tap operation on the style 241, the style 242, or the style 243. After the interactive wallpaper of the main screen is set, the electronic device may display the wallpaper of the style 241 or the wallpaper of the style 242, or the wallpaper of the style 243 in the main screen preview area 255.

For example, in response to a double tap operation on the style 241 or the style 242 or the style 243, the electronic device may further cancel setting the interactive wallpaper to the wallpaper of the style 241 or the wallpaper of the style 242 or the wallpaper of the style 243. After the electronic device cancels setting the interactive wallpaper, in this case, the electronic device may be considered to be in a state in which the interactive wallpaper is not set on the back screen.

The electronic device may set corresponding interactive wallpapers on both the main screen and the back screen in response to a user operation, or set an interactive wallpaper only on the main screen, or set an interactive wallpaper only on the back screen. When the corresponding interactive wallpapers are set on both the main screen and the back screen, the interactive wallpaper set on the main screen may be the same as or different from the interactive wallpaper on the back screen. This is not limited in this application. In a possible implementation, upper areas of the user interface 240 and the user interface 250 may further include a check control, where the check control is used to set whether to validate the set interactive wallpaper on the corresponding screen.

For example, in the user interface 240, in response to an operation of selecting the check control by the user, the electronic device may determine (that the always on display function in the user interface 220 shown in FIG. 2C is enabled), and displays the interactive wallpaper on the back screen when the screen is turned off. In the user interface 240, in response to an operation of deselecting the check control by the user, the electronic device may determine (that the always on display function in the user interface 220 shown in FIG. 2C is enabled), and does not display the interactive wallpaper on the back screen when the screen is turned off. Similarly, in the user interface 250, in response to an operation of selecting the check control by the user, the electronic device may determine (that the always on display function in the user interface 220 shown in FIG. 2C is enabled), and display the interactive wallpaper on the main screen when the screen is turned off. In the user interface 250, in response to an operation of deselecting the check control by the user, the electronic device may determine (that the always on display function in the user interface 220 shown in FIG. 2C is enabled), and does display the interactive wallpaper on the main screen when the screen is turned off. The check controls of the user interface 240 and the user interface 250 may be both selected, or one of the check controls of the user interface 240 and the user interface 250 is selected. This is not limited in this application. It should be noted that, if the always on display function in the user interface 220 shown in FIG. 2C is disabled, regardless of whether the check controls of the user interface 240 and the user interface 250 are selected, the electronic device does not display the interactive wallpaper on the main screen or the back screen when the screen is turned off.

Based on the foregoing user settings, the electronic device may display interactive wallpapers of a same style on the main screen and/or the back screen in response to a user operation; and the electronic device may also display interactive wallpapers of different styles on the main screen and/or the back screen in response to a user operation. In this way, the electronic device may display the interactive wallpaper only on the main screen in response to a user operation. Optionally, the electronic device may determine, by determining whether the screen faces upward, whether to display the interactive wallpaper on the main screen or display the interactive wallpaper on the back screen.

For example, the electronic device may display a user interface 250 in response to a tap operation on the control 244. The user interface 240 is a user interface provided by the electronic device for setting chroma glow pack styles. Similarly, the user interface 250 may include a style 251, a style 252, and style 253, and a main screen preview area 255. The main screen preview area 255 is used to preview the style of the currently set interactive wallpaper displayed on the main screen. For example, the style of the interactive wallpaper is not determined currently, and no specific style is displayed in the main screen preview area 255. Optionally, the electronic device may display more styles in response to an upward-slide operation on a "pack selection" area.

Optionally, the electronic device may further include a control 254. The control 254 indicates to set the interactive wallpaper displayed on the back screen. For example, the control 254 display text content "flip to display the back screen". For example, the electronic device may display a user interface 240 in response to an operation of the user on the control 254.

In response to a tap operation on the style 251 or the style 252 or the style 253, the electronic device may set the interactive wallpaper displayed on the main screen to the wallpaper of the style 251 or the wallpaper of the style 252 or the wallpaper of the style 253. The wallpaper of the style 251 or the wallpaper of the style 252 or the wallpaper of the style 253 may be displayed in the main screen preview area 255 after the interactive wallpaper is set. For example, in response to a double tap operation on the style 251 or the style 252 or the style 253, the electronic device may further cancel setting the interactive wallpaper to the wallpaper of the style 251 or the wallpaper of the style 252 or the wallpaper of the style 253. After the electronic device cancels setting the interactive wallpaper, in this case, the electronic device may be considered to be in a state in which the interactive wallpaper is not set on the main screen.

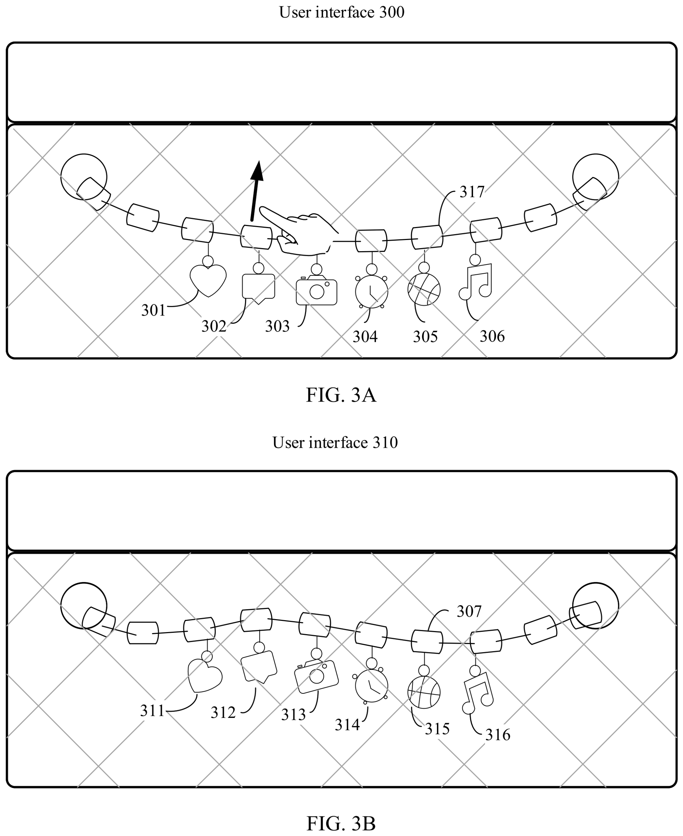

FIG. 3A to FIG. 3I show related user interfaces for displaying an interactive wallpaper according to an embodiment of this application. The user interfaces shown in FIG. 3A to FIG. 3I are described when the electronic device is in a landscape state.

As shown in FIG. 3A, a user interface 300 is a user interface for displaying an interactive wallpaper by the electronic device. The interactive wallpaper of the style 241 is displayed in the user interface 300. The user interface 300 may be an interface displayed by the electronic device in response to a user operation after the screen is turned off. The user interface 300 may include but is not limited to: an icon 301, an icon 302, an icon 303, an icon 304, an icon 305, an icon 306, and a chain 307. Respective states of the icon 301, the icon 302, the icon 303, the icon 304, the icon 305, and the icon 306 simulate the state in which the pendant on the chain droops naturally in the real state. The state of the chain 307 simulates the state in which the chain droops naturally in the real state. The electronic device may display a user interface 310 in response to a slide operation on the chain 307. For a direction of the slide operation, refer to the arrow direction in FIG. 3A. Alternatively, the electronic device may adjust display states of the chain 307 and the icons 301 to 306 in response to an operation of shaking the mobile phone and adjusting the state (horizontal, vertical, or the like) of the mobile phone by the user. For example, the electronic device may calculate a movement state of the electronic device based on detected movement data that is of the electronic device and that is collected by a sensor such as a movement sensor or a gravity sensor, so as to adjust the display states of the chain 307 and the icons 301 to 306 based on the movement state.

As shown in FIG. 3B, the interactive wallpaper of the style 241 is also displayed in the user interface 310. The user interface 310 may include but is not limited to: an icon 311, an icon 312, an icon 313, an icon 314, an icon 315, an icon 316, and a chain 317. The state of the chain 317 simulates the state of the chain after being shaken by the user in a real state. The state of the chain 317 simulates the state after the chain shakes with the shaking of the electronic device in the real state, as shown in FIG. 3B, and the chain 317 may be wavy. In this embodiment of this application, not limited to the shape of the chain 317 in FIG. 3B, the electronic device may further change the chain 317 to any shape in response to a user operation, provided that the length does not change. The icon 311, the icon 312, the icon 313, the icon 314, the icon 315, and the icon 316 may change with the change of the shape of the chain 317. It should be noted that, a process in which the electronic device changes the shape of the chain 317 is a dynamic and user-visible process. In this process, the icons may swing with the change of the chain 317.

For example, the electronic device may display a user interface 320 in response to a tap operation on the icon 312.

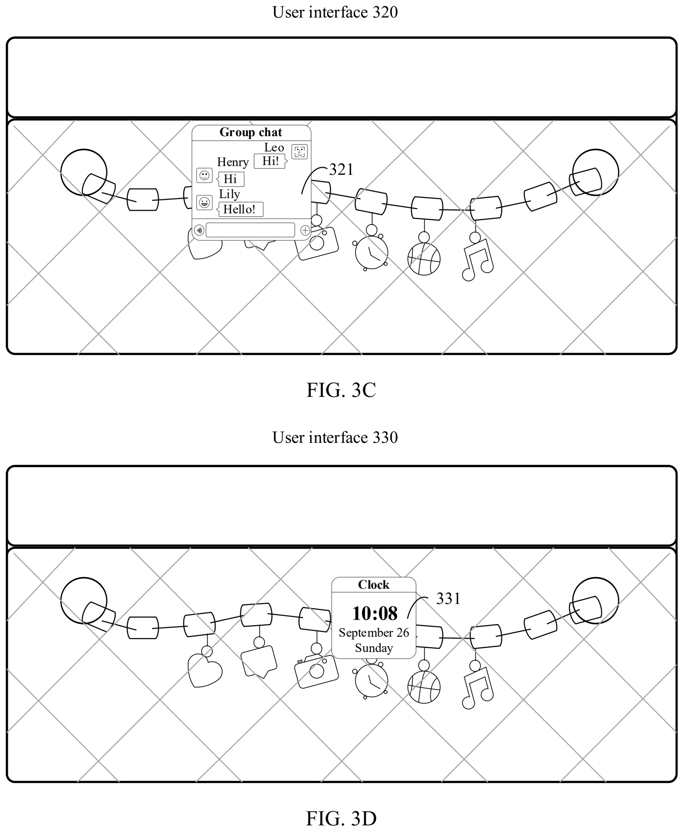

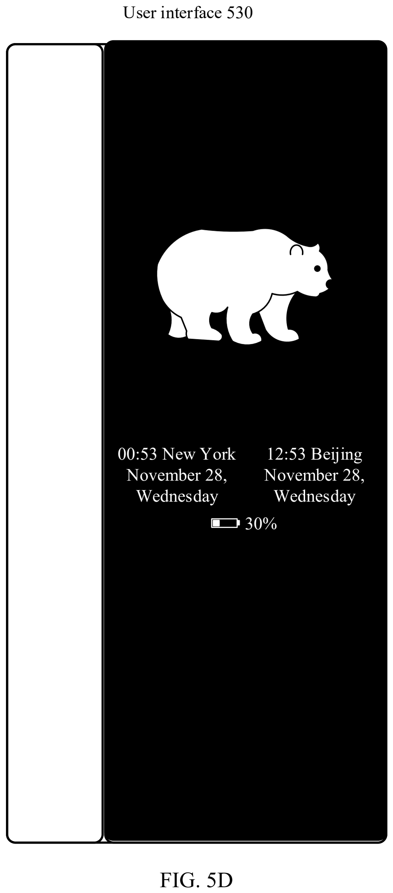

As shown in FIG. 3C, the user interface 320 may include but is not limited to a prompt box 321. The prompt box 321 is provided by an application indicated by the icon 312, for example, a social application. The size of the prompt box 321 is not greater than the size of the back screen. For example, the prompt box 321 may display a chat box interface. In a possible implementation, the chat box interface displayed in the prompt box 321 may be the first chat box in a social application, or the chat box interface displayed in the prompt box 321 may be any chat box interface with a friend. In this embodiment of this application, the chat box interface displayed in the prompt box 321 is only an example for description, and a message sent by a friend may also be displayed. This is not limited. The electronic device may enter the social application in response to a tap operation on the prompt box 321. In a possible implementation, before entering the social application, if the electronic device is provided with a screen lock password, the electronic device may first display a lock screen interface in response to the tap operation on the prompt box 321. Then the electronic device enters the social application after receiving an unlock operation. For the lock screen interface, refer to the following FIG. 5D. The unlock operation may include but is not limited to: a touch operation on a specific area (such as a fingerprint recognition area), a face unlock operation facing the camera, an operation of entering a password (such as an alphabetic and/or numeric password or a graphic password), and the like.

For example, the electronic device may display a user interface 330 in response to a tap operation on the icon 314. As shown in FIG. 3D, the user interface 330 may include but is not limited to a prompt box 331. The prompt box 331 is provided by an application indicated by the icon 313, for example, a clock application. The size of the prompt box 331 is not greater than size of the back screen. For example, the prompt box 331 may display a clock date, for example, "10:08 September 26 Sunday". In this embodiment of this application, the clock date displayed in the prompt box 331 is only an example for description, and alarm time may also be displayed. This is not limited. The electronic device may enter the clock application in response to the tap operation on the prompt box 331. In a possible implementation, before entering the clock application, if the electronic device is provided with a screen lock password, the electronic device may first display a lock screen interface in response to the tap operation on the prompt box 331. Then the electronic device enters the clock application after receiving an unlock operation.

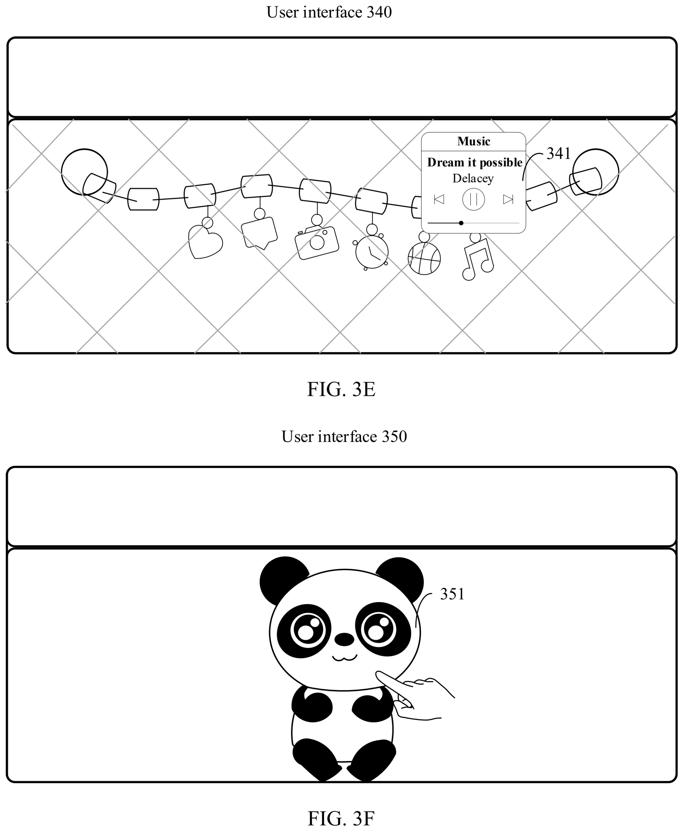

For example, the electronic device may display a user interface 340 in response to a tap operation on the icon 316. As shown in FIG. 3E, the user interface 340 may include but is not limited to a prompt box 341. The prompt box 341 is provided by an application indicated by the icon 314, for example, a music application. The size of the prompt box 341 is not greater than the size of the back screen. For example, the prompt box 341 may display a name of a song currently played and a singer's name. In this embodiment of this application, the song name and the singer's name displayed in the prompt box 331 are only examples for description, and content in other music applications and the like may also be displayed. This is not limited. By using the prompt box 341, the electronic device may control the pause or start of music playing, and play the previous or next music. The electronic device may enter the music application in response to the tap operation on the prompt box 341. In a possible implementation, before entering the music application, if the electronic device is provided with a screen lock password, the electronic device may first display a lock screen interface in response to the tap operation on the prompt box 341. Then the electronic device enters the music application after receiving an unlock operation. The foregoing prompt boxes may play a role in preventing accidental touch before the electronic device enters various applications.

As shown in FIG. 3F, a user interface 350 is a user interface for displaying an interactive wallpaper by the electronic device. The interactive wallpaper of the style 242 is displayed in the user interface 350. The user interface 350 may include a panda picture 351. The panda picture 351 is posed with both hands raised, both legs curled inward, and the corners of its mouth upturned. The electronic device may display a user interface 360 in response to a tap operation on the panda picture 351.

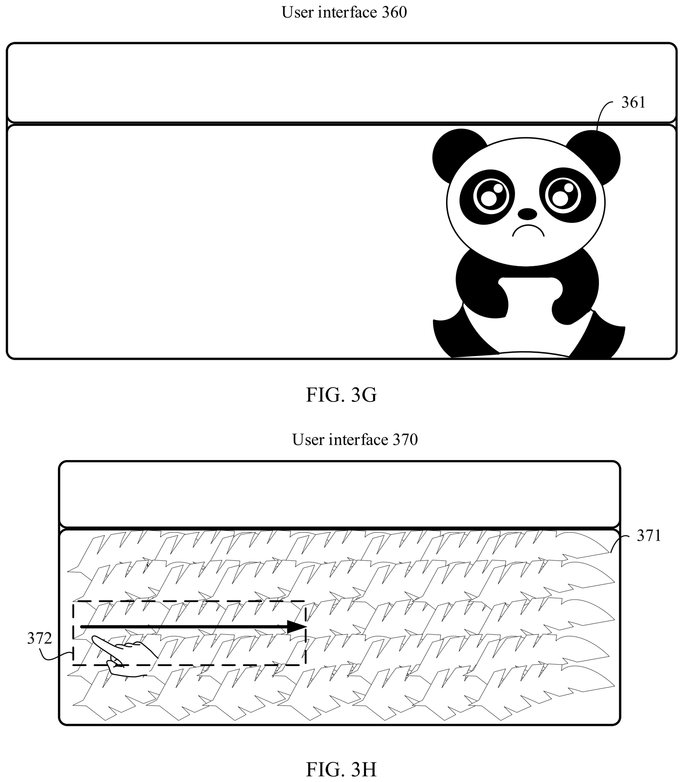

As shown in FIG. 3G, the interactive wallpaper of the style 242 is also displayed in the user interface 360. The user interface 360 may include a panda picture 361. The panda picture 361 is posed with both hands down, both legs straight, and mouth corners downward. In addition, the position of the panda picture 361 in the wallpaper also changes, and moves rightward by a distance relative to the position of the panda picture 351. In this embodiment of this application, not limited to the posture of the panda picture 361 in FIG. 3G, the electronic device also changes the posture of the panda picture 361 to other various postures in response to a user operation, without limiting the posture. In a possible implementation, the electronic device may change the panda picture 361 to different postures each time in response to a user operation. It should be noted that, a process in which the electronic device changes the posture of the panda picture 361 is a dynamic and user-visible process.

As shown in FIG. 3H, a user interface 370 is a user interface for displaying an interactive wallpaper by the electronic device. The interactive wallpaper of the style 243 is displayed in the user interface 370. The user interface 370 may include a feather picture 371. The state of the feather picture 371 simulates the state in which the feathers are naturally spread out in the growth direction of the feathers in the real state. The electronic device may display a user interface 380 in response to a slide operation on the area 372. For a direction of the slide operation, refer to the arrow direction in FIG. 3H.

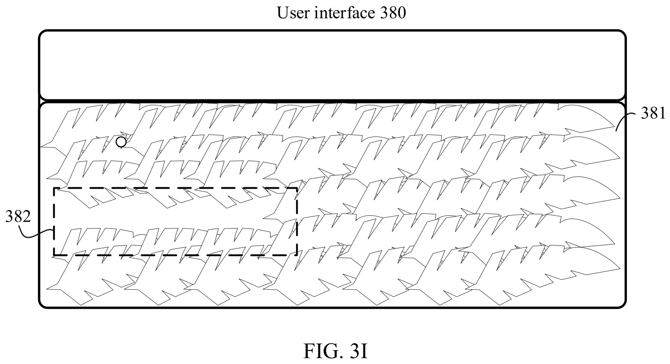

As shown in FIG. 3I, the interactive wallpaper of the style 243 is also displayed in the user interface 380. The user interface 380 may include a feather picture 381. The state of the feathers in an area 382 in the feather picture 381 simulates the state in which the feathers are attached to other feathers after being moved by fingers in the real state. In this embodiment of this application, not limited to the state of the feathers in the area 382 in FIG. 3I, the electronic device further changes the state of the feathers in the feather picture 381 to various other states in response to a user operation, without limiting the state of the feathers. In a possible implementation, the electronic device may change the state of the feathers in the area 382 to different states in response to slide operations in different directions. It should be noted that, a process in which the electronic device changes the state of the feathers in the area 382 is a dynamic and user-visible process.

Not limited to the foregoing styles, the electronic device may also change the color of a picture in the interactive wallpaper based on the change of ambient light; and the electronic device may also change a relative position of an internal element of the picture in the interactive wallpaper based on a currently recognized gravity direction, and the like.

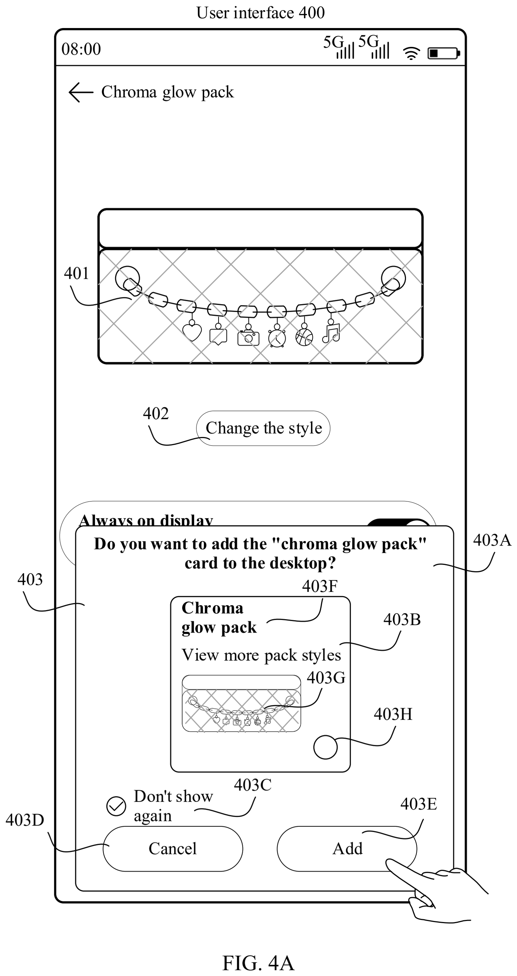

FIG. 4A to FIG. 4J show related user interfaces for setting an interactive wallpaper according to an embodiment of this application.

For example, the electronic device may set the interactive wallpaper to the wallpaper of the style 241 in response to a tap operation on the style 241. Subsequently, the electronic device may return to displaying the user interface 220 in response to an operation of tapping a return control by the user. In this case, the wallpaper of the style 241 is displayed in the back screen preview area 245 of the user interface 220. In some implementations, after detecting, in the user interface 220, that the interactive wallpaper of the style 241 is set, the electronic device may automatically display pop-up information, namely, display a user interface 400. In another possible implementation, the electronic device may display a user interface 400 in response to a tap operation on the card add control 225 in the user interface 220.

As shown in FIG. 4A, the user interface 400 may include but is not limited to a back screen preview area 401, a style change control 402, and a prompt box 403. A style of the currently selected interactive wallpaper, for example, the style 241, is displayed in the back screen preview area 401. The prompt box 403 may include prompt information 403A, a card 403B, a check control 403C, a cancel control 403D, and an add control 403E. For example, the prompt information 403A displays text information "Do you want to add the "chroma glow pack" card to the desktop?". The card 403B may include a card name 403F, a preview wallpaper 403G, and a control 403H. The card name 403F displays the text information "chroma glow pack". Content displayed in the preview wallpaper 403G is consistent with content displayed in the back screen preview area 401, but sizes are different. The control 403H indicates that the electronic device can enter the screen-locked and screen-off state. The check control 403C may indicate that after the style of the interactive wallpaper is changed next time, the prompt box 403 is not displayed, and the setting of adding or not adding the card 403B this time is still used by default. The electronic device may cancel adding the card 403B in response to a tap operation on the cancel control 403D. The electronic device may also add the card 403B to the desktop in response to a tap operation on the add control 403E. After adding the card 403B, the electronic device may display a user interface 410 in response to a user operation.

In a possible implementation, the electronic device may automatically add the "chroma glow pack" card. For example, after detecting, in the user interface 220, that the interactive wallpaper of the style 241 is set, the electronic device may automatically display pop-up information, namely, display a user interface 410.

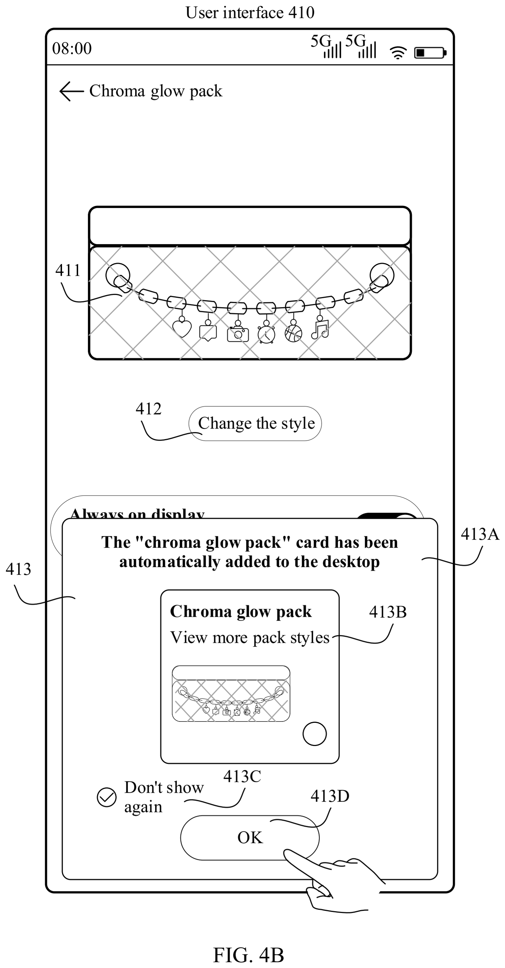

As shown in FIG. 4B, the user interface 410 may include a back screen preview area 411, a style change control 412, and a prompt box 413. The prompt box 413 may include prompt information 413A, a card 413B, a check control 413C, and a control 413D. For example, the prompt information 413A displays text information "The "chroma glow pack" card has been automatically added to the desktop". For the card 413B, refer to the related descriptions of the card 403B. Details are not described herein. The check control 413C may indicate that the card can be automatically added next time without prompting again. The control 413D is used to close the prompt box 413. After adding the card 413B, the electronic device may display a user interface 420 in response to a user operation.

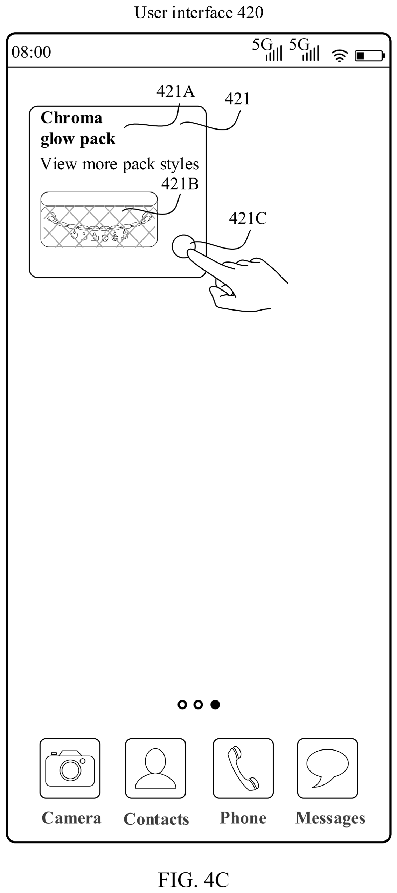

As shown in FIG. 4C, the user interface 420 is a desktop provided by the electronic device. The user interface 420 may be a desktop displayed by the electronic device in response to a leftward slide operation of the user when the main interface is displayed. In a possible implementation, the electronic device may add the card 403B or the card 413B to the main interface by default.

The user interface 420 may include but is not limited to a card 421. The card 421 is provided by a setting application, to enable a function of displaying the interactive wallpaper. Further, the card 421 may also view or change the style of the interactive wallpaper in response to a user operation. Furthermore, the card 421 may be further used to enable the electronic device to enter the screen-locked and screen-off state in response to a user operation, and display the interactive wallpaper on the main screen or the back screen. The size of the card 421 may be shown in FIG. 4C, or may be twice of the size of the card shown in FIG. 4C. The card 421 may be in a shape of a square, a rectangle, a circle, an ellipse, or the like. The background color of the card 421 may be light-colored or dark-colored. In this embodiment of this application, the size, the shape, and the background color of the card 421 are not limited.

The card 421 may include a card name 421A, a preview wallpaper 421B, and a control 421C. For example, the card name 421A displays text content "chroma glow pack", and the preview wallpaper 421B displays the wallpaper of the style 241. The electronic device may enter the screen-locked and screen-off state in response to a tap operation on the control 421C, and display the interactive wallpaper on the main screen or the back screen.

Specifically, as shown in FIG. 2C, the always on display function in the user interface 220 is disabled, and the slide control 223 is in a closed state. The electronic device may enter the screen-locked and screen-off state in response to a tap operation on the control 421C when the function of displaying the interactive wallpaper is disabled in the setting application, and display, within duration (for example, 5 minutes or 30s), the interactive wallpaper of the style indicated by the preview wallpaper 421B. Subsequently, after switching to the unlocked and screen-on state, in response to a screen lock operation, for example, a press operation on a screen lock button, the electronic device enters the screen-locked and screen-off state. However, because the electronic device disables, in the setting application, the function of displaying the interactive wallpaper, the electronic device cannot display the interactive wallpaper in this case. In other words, the interactive wallpaper is started only once by using the desktop card.

In this way, the user can observe the style of the interactive wallpaper more conveniently, without first enabling the function of displaying the interactive wallpaper, and then switching to the screen-locked and screen-off state to display the interactive wallpaper.

Certainly, as shown in FIG. 2C, the always on display function in the user interface 220 is enabled, and the slide control 223 is in a started state. The electronic device may also enter the screen-locked and screen-off state in response to a tap operation on the control 421C when the function of displaying the interactive wallpaper is enabled, and display, within duration (for example, 5 minutes or 30s), the interactive wallpaper of the style indicated by the preview wallpaper 421B. The electronic device enters the screen-locked and screen-off state in response to the tap operation on the control 421C, where duration in which the interactive wallpaper is displayed may be fixed.

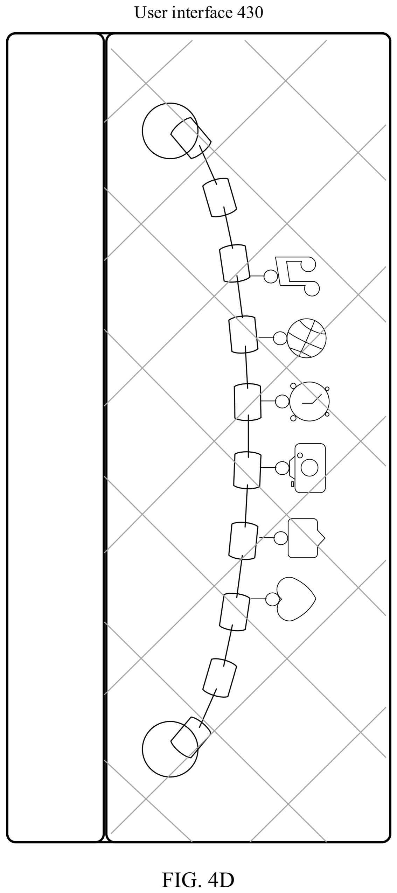

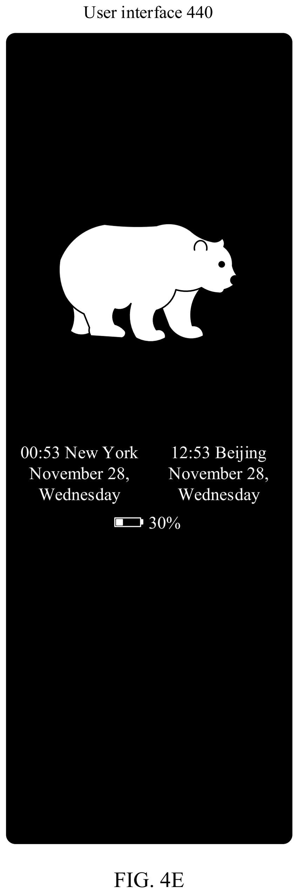

For example, the electronic device may enter the screen-locked and screen-off state in response to the tap operation on the control 421C, and display a user interface 430 shown in FIG. 4D on the back screen. The interactive wallpaper of the style indicated by the preview wallpaper 421B may be displayed in the user interface 430. When the electronic device enables the AOD function, the electronic device may display a user interface 440 shown in FIG. 4E after displaying the user interface 430 for a period of time. A screen-off wallpaper is displayed in the user interface 440. When the electronic device does not enable the AOD function, the electronic device controls the back screen to be turned off after displaying the user interface 430 for a period of time.

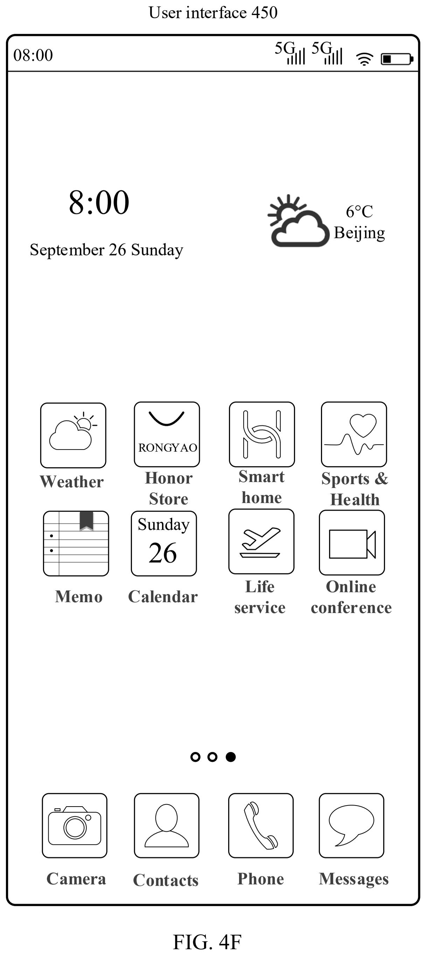

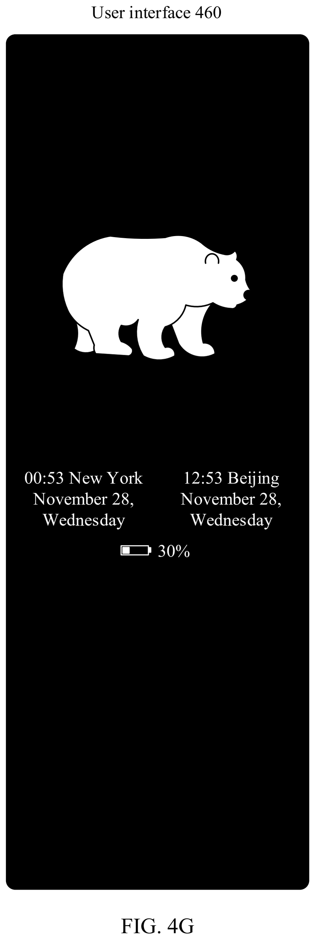

For example, when the electronic device disables, in the setting application, the function of displaying the interactive wallpaper, and starts the AOD function, the electronic device may display a user interface 460 shown in FIG. 4G in response to a screen lock operation when displaying the user interface 450 shown in FIG. 4F. The user interface 460 is consistent with the user interface 440. When the electronic device disables, in the setting application, the function of displaying the interactive wallpaper, and disables the AOD function, the electronic device may control the back screen to be turned off in response to a screen lock operation when displaying the user interface 450 shown in FIG. 4F.

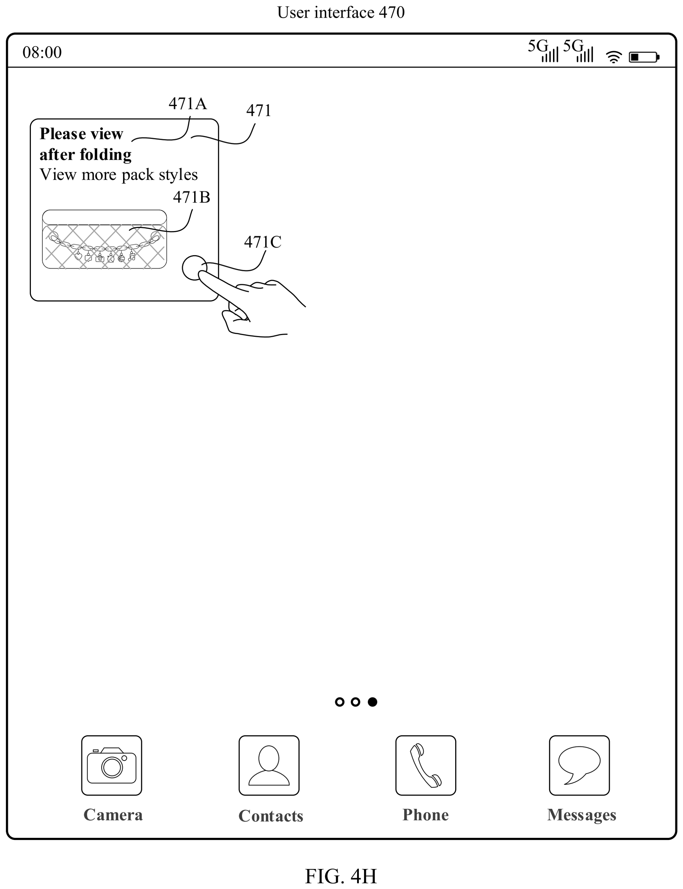

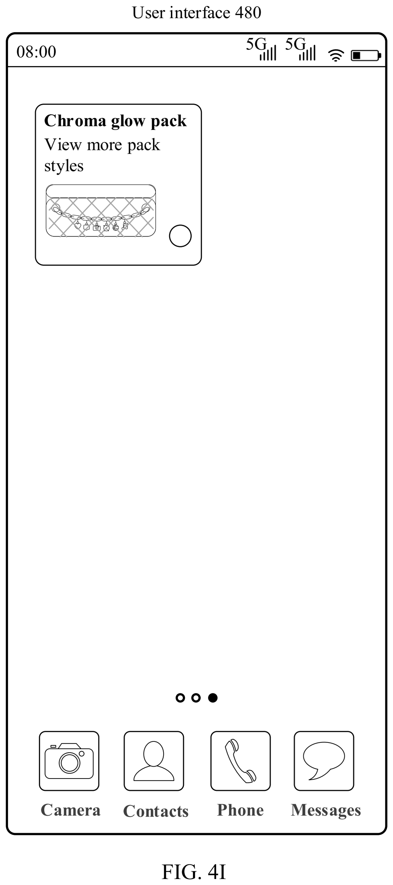

In a possible implementation, when the electronic device is in the unfolded state, the electronic device cannot display the interactive wallpaper in the screen-locked and screen-off state. Refer to FIG. 4H. A user interface 470 is also a desktop provided by the electronic device. The user interface 470 also includes a card 471. The card 471 may include prompt information 471A, a preview wallpaper 471B, and a control 471C. The prompt information 471A may be used to inform the user that the function of displaying the interactive wallpaper is invalid currently, and takes effect after the electronic device is folded. For example, the prompt information 471A may display text content "Please experience after folding". The electronic device cannot enter the screen-locked and screen-off state in response to a tap operation on the control 471C. To be specific, the current operation on the control 471C is an invalid operation. After being folded, the electronic device may display a user interface 480 shown in FIG. 4I. The user interface 480 is consistent with the user interface 420.

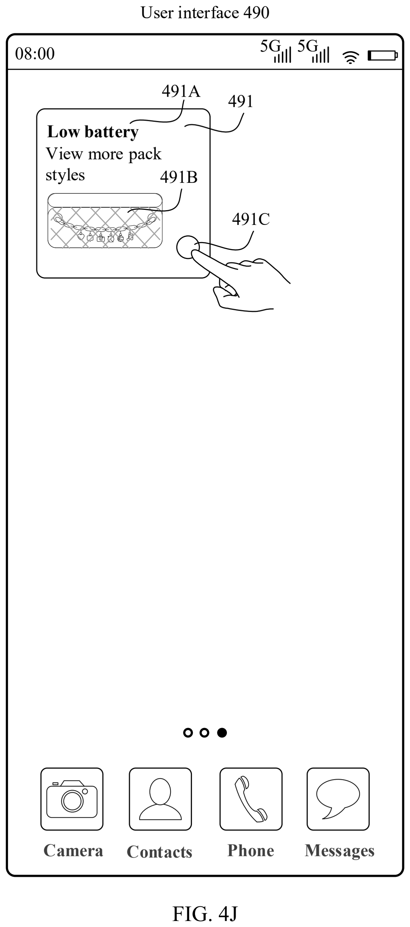

In another possible implementation, when power of the electronic device is less than a power threshold (for example, 20%), the electronic device cannot display the interactive wallpaper in the screen-locked and screen-off state. With reference to FIG. 4J, a user interface 490 is also a desktop provided by the electronic device. The user interface 490 also includes a card 491. The card 491 may include prompt information 491A, a preview wallpaper 491B, and a control 491C. The prompt information 491A may be used to inform the user that the function of displaying the interactive wallpaper is invalid currently, and takes effect after the power of the electronic device is greater than the power threshold. For example, the prompt information 491A may display text content "low battery". The electronic device cannot enter the screen-locked and screen-off state in response to a tap operation on the control 491C. To be specific, the current operation on the control 491C is an invalid operation. After the power of the electronic device exceeds the power threshold, the user interface 480 may be displayed.

In this embodiment of this application, content included in the card 421 is merely an example for description, and may further include more or fewer functions. This is not limited. In addition, the position of the card 421 on the desktop is merely an example for description, and the card 421 may also be located in another desktop interface, for example, a leftmost desktop, a main interface, or the like. This is not limited.

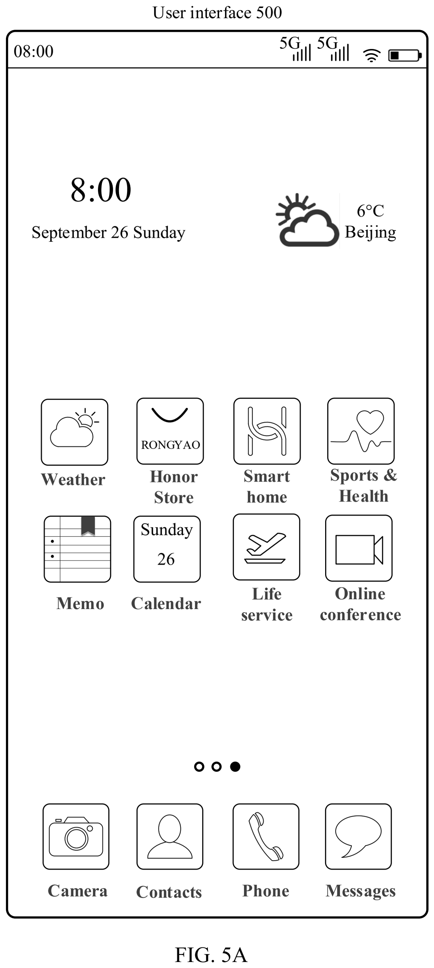

FIG. 5A to FIG. 5I show related user interfaces for displaying an interactive wallpaper according to an embodiment of this application. In this embodiment of this application, herein, an example in which the electronic device is in the folded state and the main screen displays the user interface is used for description.

For example, the electronic device may set the interactive wallpaper to the wallpaper of the style 241 in response to a tap operation on the style 241. Then, the electronic device may display a user interface 500 on a display in response to a user operation.

As shown in FIG. 5A, the user interface 500 is a main interface provided by the electronic device. In this embodiment of this application, the user interface 500 is not limited and may be any user interface. The electronic device may switch from the unlocked and screen-on state to the screen-locked and screen-off state in response to a screen lock operation.

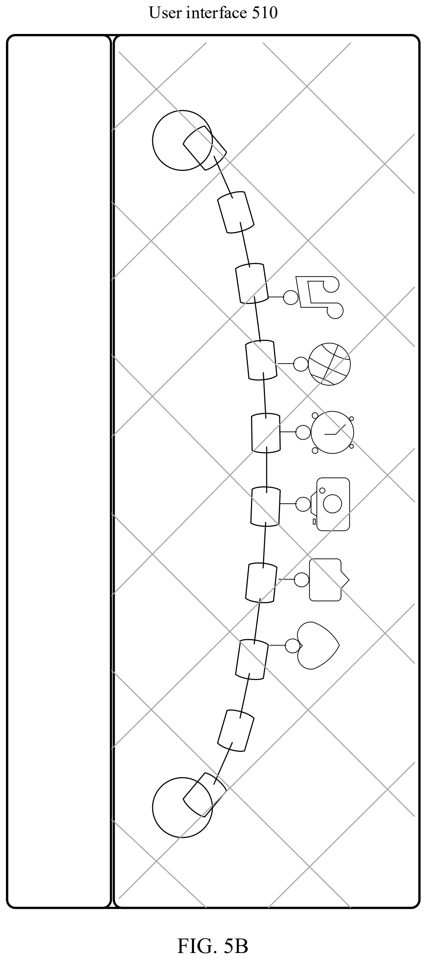

Once entering the screen-locked and screen-off state, the electronic device displays a user interface 510 shown in FIG. 5B. It should be noted that, duration in which the electronic device displays the user interface 510 may be display duration of the interactive wallpaper set by the user (for example, 5 minutes displayed by the duration display control 224), or may be display duration preset by the electronic device. For the user interface 510, refer to the foregoing user interface 300.

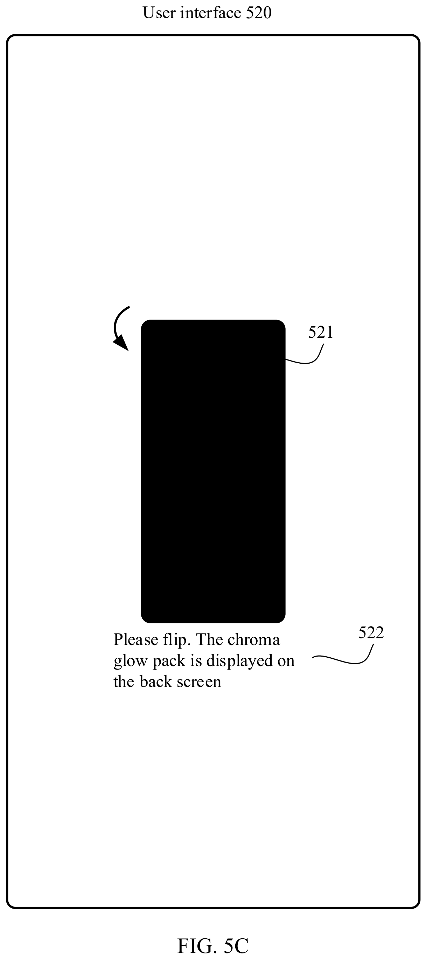

When the back screen of the electronic device displays the user interface 510, the main screen of the electronic device displays the user interface 520. As shown in FIG. 5C, the user interface 520 may include a prompt picture 521 and prompt information 522. The prompt picture 521 includes an arrow and a screen, to inform the user to flip the electronic device. The prompt information 522 may display text content "Please flip. The chroma glow pack are displayed on the back screen". In a possible implementation, when displaying the user interface 510 on the back screen, the electronic device may further control the main screen to be turned off. To be specific, the main screen does not display the user interface 520. In this way, power consumption can be reduced.

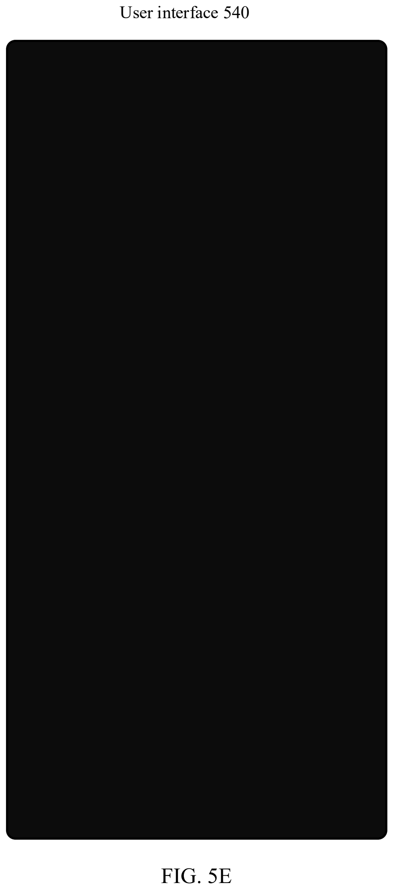

For example, when the electronic device enables the AOD function, after displaying the user interface 510 on the back screen and displaying the user interface 520 on the main screen for a period of time, the electronic device may display a user interface 530 shown in FIG. 5D on the back screen, and display a user interface 540 shown in FIG. 5E on the main screen. When the electronic device disables the AOD function, the electronic device controls the back screen and the main screen to be turned off.

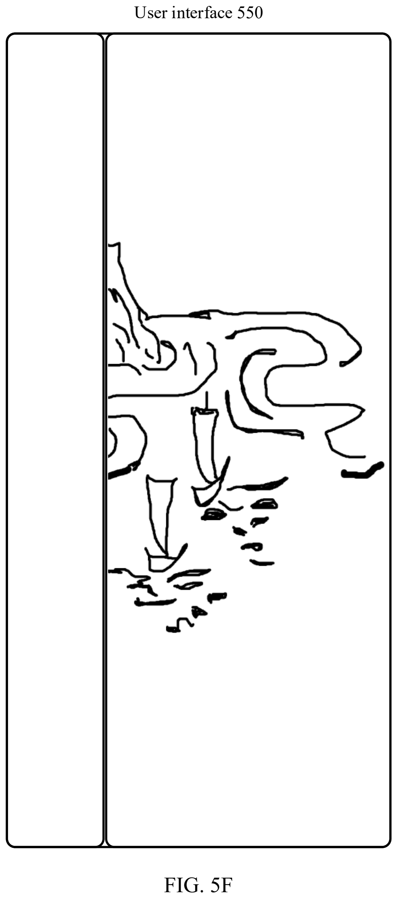

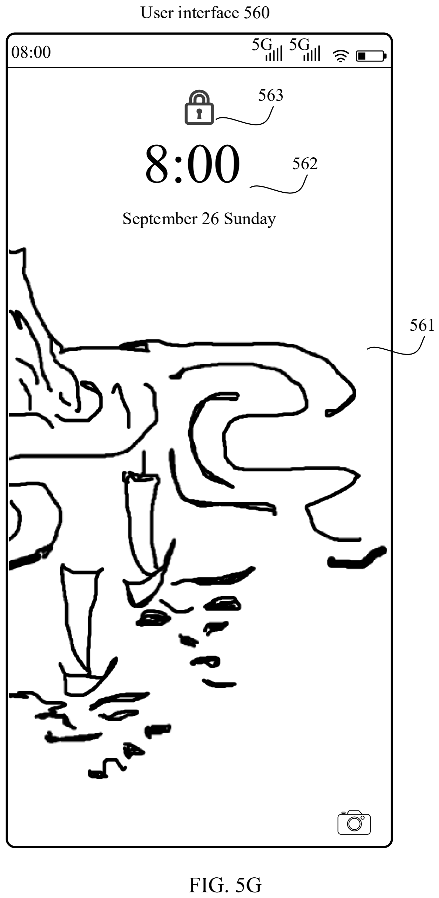

In response to a screen-on operation on the user interface 510 or the user interface 520, the electronic device may display a user interface 550 shown in FIG. 5F on the back screen, and display a user interface 560 shown in FIG. 5G on the main screen. A screen lock wallpaper is displayed on the user interface 550. A screen lock wallpaper is also displayed on the user interface 560. The screen-on operation may include but is not limited to: an operation of double tapping the screen, a press operation on a screen lock button on a side edge or a top edge of the electronic device, and the like. The user interface 560 may include a screen lock wallpaper 561, a screen lock indicator 562, and a date time indicator 563. The electronic device may display the user interface 500 in response to an unlock operation.

It should be noted that, the electronic device may switch from the screen-locked and screen-off state to the screen-locked and screen-on state. When the electronic device enables the screen lock display function of the back screen, the electronic device may display a screen lock wallpaper on the back screen after being in the screen-locked and screen-on state in the folded state. In addition, the screen lock wallpaper displayed on the back screen may be consistent with the screen lock wallpaper displayed on the main screen. For example, the wallpaper shown on the user interface 550 may also be inconsistent with the wallpaper shown on the user interface 560. When the electronic device disables the screen lock display function of the back screen, the electronic device does not display the screen lock wallpaper on the back screen, and the electronic device may control the back screen to be black.

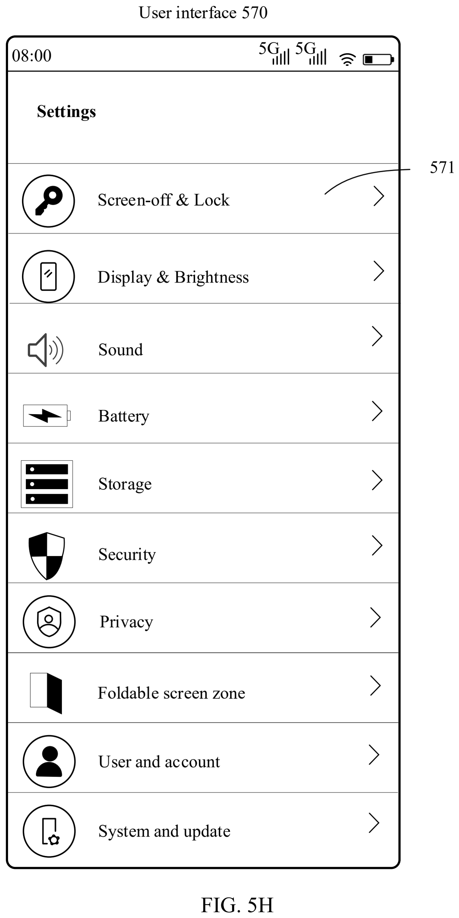

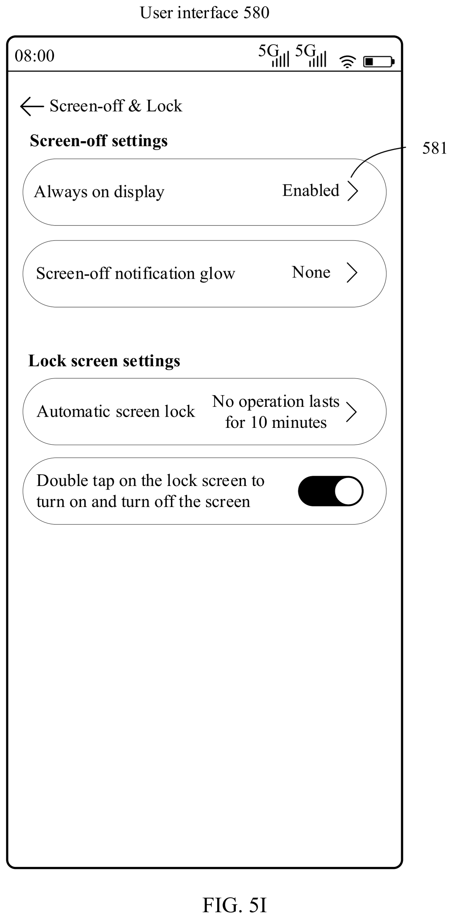

In this embodiment of this application, when the electronic device enables the AOD function and enables the interactive wallpaper display function, the electronic device may display the interactive wallpaper with priority in the screen-locked and screen-off state. Only after the display duration of the interactive wallpaper reaches preset duration, the screen-off wallpaper can be displayed based on the set mode of displaying the AOD interface. When the electronic device does not enable the AOD function and enables the interactive wallpaper display function, the electronic device may display the interactive wallpaper in the screen-locked and screen-off state. After the display duration of the interactive wallpaper reaches preset duration, the electronic device may control the display to be turned off, that is, does not display the screen-off wallpaper. An entry for enabling the AOD function by the electronic device is inconsistent with an entry for enabling the interactive wallpaper display function. In other words, the AOD function and the interactive wallpaper are two different display functions. With reference to FIG. 5H, a user interface 570 is a user interface provided for a setting application of the electronic device. The electronic device may display a user interface 570 in response to an operation of the user on a setting icon in the desktop. The user interface 570 may include a plurality of function bars, such as a screen-off and screen lock bar 571 (or referred to as a desktop and wallpaper setting bar). The electronic device may display a user interface 580 shown in FIG. 5I in response to a tap operation on the screen-off and screen lock bar 571. As shown in FIG. 5I, the user interface 580 is a user interface used by the electronic device to set a screen-off and screen lock related function. The user interface 580 may include but is not limited to an always on display control 581. The always on display control 581 may further include prompt information. For example, the prompt information may display text content "enabled", indicating that the electronic device has enabled the always on display function. The always on display function may also be set by tapping the control 581. For example, the always on display function is disabled, or content of the always on display function is set.

Embodiments of this application provide a method for displaying an interactive wallpaper and a related apparatus. In this method, the electronic device may set an interactive wallpaper displayed on a back screen in a screen-locked and screen-off state. Then, the electronic device displays the interactive wallpaper in the screen-locked and screen-off state. Subsequently, an operation of a user on the interactive wallpaper is detected, to change content displayed on the interactive wallpaper.

In the foregoing method, various interactive wallpapers may be disposed, to fully meet personalized requirements of users. In addition, an electronic device in a screen-locked and screen-off state may also be enabled to display an interactive wallpaper, to achieve more aesthetic affect. In addition, the user may also operate the interactive wallpaper and observe a change of the interactive wallpaper, making the process of using the electronic device more interesting for the user.

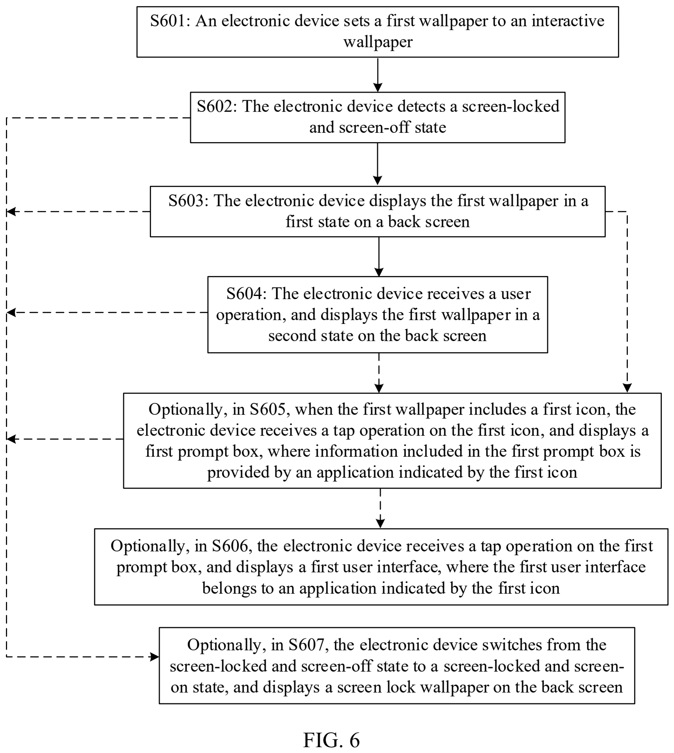

With reference to FIG. 6, the following describes a method for displaying a wallpaper according to an embodiment of this application. An execution body of the method shown in FIG. 6 may be the electronic device mentioned above. Alternatively, the execution body of the method shown in FIG. 6 may be a chip in the electronic device. This is not limited in this embodiment of this application. FIG. 6 is described by using an example in which the electronic device is the execution body of the method. The electronic device includes a display, where the display includes a main screen and a back screen. The method procedure shown in FIG. 6 is described when the electronic device is in a folded state, and when the electronic device is in the folded state, the main screen and the back screen face opposite directions. The method includes the following steps.

**S601: The electronic device sets a first wallpaper to an interactive wallpaper.**

The interactive wallpaper may be a wallpaper displayed on the back screen after the electronic device switches to a screen-locked and screen-off state. In addition, the interactive wallpaper may change in the form based on a user operation. The interactive wallpaper may be provided by a system application in the electronic device.

In some implementations, the electronic device may set the first wallpaper to the interactive wallpaper in response to a user operation. For example, the electronic device may enter a setting application in response to a tap operation on a setting icon, and then set the first wallpaper to the interactive wallpaper. The electronic device may also enter an interactive wallpaper setting interface in response to a tap operation on a card of the interactive wallpaper, and then set the first wallpaper to the interactive wallpaper.

Before the electronic device sets the first wallpaper to the interactive wallpaper, the electronic device may set duration in which the interactive wallpaper is displayed on the back screen, for example, 15 seconds, 30 seconds, 1 minute, or 5 minutes. Before setting the first wallpaper to the interactive wallpaper, the electronic device may preview the first wallpaper, to observe effects of first wallpapers of various styles. Optionally, the electronic device may further adjust elements included in the first wallpaper.

There may be a plurality of types of styles of the first wallpaper, for example, a wallet style, an animal style, a feather style, a water flow style, and a multi-ball style. For example, when the first wallpaper is of the wallet style, the electronic device may adjust the elements included in the first wallpaper, for example, change an icon indicating a social application to an icon indicating a weather application. In this embodiment of this application, the styles of the first wallpaper are merely examples for description, and may further include more styles. This is not limited.

The first wallpaper of each style may further include a plurality of states. First wallpapers in different states may include same elements, and forms of the same elements in the first wallpapers in different states may be different. Forms of the elements may include but are not limited to: sizes, positions, shapes, colors, movement states, and the like of the elements. For example, refer to the chain 307 in FIG. 3A and the chain 317 in FIG. 3B, the panda picture 351 in FIG. 3E and the panda picture 361 in FIG. 3F, and the feathers in the area 372 in FIG. 3G and the feathers in the area 382 in FIG. 3H.

**S602: The electronic device detects a screen-locked and screen-off state.**

In some implementations, the electronic device may switch from an unlocked and screen-on state to the screen-locked and screen-off state, or may switch from a screen-locked and screen-on state to the screen-locked and screen-off state. In this embodiment of this application, a state before the electronic device switches to the screen-locked and screen-off state is not limited. For example, the electronic device may switch from the unlocked and screen-on state to the screen-locked and screen-off state in response to a screen lock operation. The screen lock operation may include but is not limited to: a press operation on a screen lock button on a side edge or a top edge of the electronic device, a tap operation on a screen lock control in a user interface, a voice instruction, a gesture instruction, and the like. For another example, the electronic device may switch from the screen-locked and screen-on state to the screen-locked and screen-off state in response to a press operation on the screen lock button on the side edge or the top edge of the electronic device or after a period of time (for example, 10 seconds).

In a possible implementation, the electronic device may set a card of the interactive wallpaper on the desktop. The card includes a screen-off control. The electronic device may enter the screen-locked and screen-off state in response to a tap operation on the screen-off control.

In some implementations, after performing S601, the electronic device may immediately perform S602 in response to a screen lock operation. After performing S601, the electronic device may alternatively first respond to the screen lock operation, then immediately respond to the screen-on operation, and subsequently perform S602.

**S603: The electronic device displays the first wallpaper in a first state on the back screen.**

Before displaying the first wallpaper in the first state on the back screen, the electronic device needs to enable a function of displaying the interactive wallpaper. For example, the electronic device may enable the interactive wallpaper function in the setting application, or may enable the interactive wallpaper function by using the card of the interactive wallpaper on the desktop.

In some implementations, once switching to the screen-locked and screen-off state, the electronic device immediately displays the first wallpaper in the first state. Specifically, the electronic device may immediately switch from displaying the black screen on the back screen to displaying the first wallpaper in the first state. In this way, the user can observe that the electronic device is in the screen-locked state at the moment.

The first wallpaper in the first state may be the first wallpaper in a default state preset by the electronic device, namely, the first wallpaper previewed by the electronic device. For example, for the first wallpaper in the first state, refer to the foregoing FIG. 3A, FIG. 3E, and FIG. 3G.

Because the first wallpaper is not always on display with low power consumption, considering the power consumption problem, the electronic device has a limitation on duration in which the first wallpaper is displayed. The electronic device may set preset duration in which the first wallpaper is continuously displayed without stop each time, for example, 5 minutes.

In a possible implementation, a sum of duration in which the electronic device displays the interactive wallpapers in different states each time does not exceed the preset duration. For example, if the electronic device displays the first wallpaper in the first state for more than 5 minutes and the electronic device does not display the first wallpaper in another state, when displaying the first wallpaper for the fifth minute, the electronic device switches from displaying the first wallpaper on the back screen to displaying the black screen; or if the electronic device switches, when displaying the first wallpaper in the first state for the second minute, to displaying the first wallpaper in the second state, when displaying the first wallpaper in the second state for the third minute, the electronic device switches from displaying the first wallpaper on the back screen to displaying the black screen. Total duration in which the first wallpaper is displayed is 5 minutes.

In another possible implementation, duration in which the electronic device displays the interactive wallpaper in each state each time does not exceed the display duration. For example, if the electronic device displays the first wallpaper in the first state for more than 5 minutes and the electronic device does not display the first wallpaper in another state, when displaying the first wallpaper for the fifth minute, the electronic device switches from displaying the first wallpaper on the back screen to displaying the black screen, and total duration in which the first wallpaper is displayed is 5 minutes; or if the electronic device switches, when displaying the first wallpaper in the first state for the second minute, to displaying the first wallpaper in the second state, when displaying the first wallpaper in the second state for the fifth minute, the electronic device switches from displaying the first wallpaper on the back screen to displaying the black screen, and total duration in which the first wallpaper is displayed is 7 minutes.

In this embodiment of this application, content displayed by the electronic device on the back screen after the display duration of the interactive wallpaper exceeds the preset duration is not limited. This may be black screen display or always on display. Refer to the foregoing descriptions.

**S604: The electronic device receives a user operation, and displays the first wallpaper in the second state on the back screen.**

In some implementations, the user operation may include but is not limited to: a tap operation, a slide operation in any direction, a two-finger zoom-in or zoom-out operation, a two-finger rotation operation, and the like.

In some implementations, when displaying the first wallpaper in the first state, the electronic device may receive a user operation, and display the first wallpaper in the second state on the back screen. For time in which the electronic device displays the first wallpaper in the second state, refer to the related descriptions of S603. Details are not described herein.

The following describes the first wallpaper in the first state and the first wallpaper in the second state in different styles by using examples.

For example, when the style of the first wallpaper is the handbag style, the first wallpaper in the first state may display a naturally drooping chain and various icons naturally connected to the chain in a simulated real state. The first wallpaper in the second state may display a wavy chain and various icons that change with the chain after the user moves the chain in a simulated real state. The state switching user operation may be a slide operation on the chain. Optionally, the second state may display a wavy chain and various icons that change with the chain after the electronic device is shaken in a simulated real state. Specifically, an acceleration sensor, a gravity sensor, and a movement sensor of the electronic device may detect whether the electronic device shakes, or whether the posture of the electronic device changes.

When the style of the first wallpaper is the animal style, the animal may be various animals, for example, a panda. The first wallpaper in the first state displays an animal picture in a first posture. For example, the first posture may include: both hands raised, both legs curled inward, and the mouth corners upward. The first wallpaper in a second posture displays a same animal picture in the second posture. For example, the second posture may include: both hands down, both legs straight, and mouth corners downward. The state switching user operation may be a tap operation on the animal picture.

When the style of the first wallpaper is the feather style, the first wallpaper in the first state displays feathers naturally spread out in the growth direction in a simulated real state. The first wallpaper in the second state displays feathers that are attached to other feathers after the user moves some feathers in a simulated real state. The state switching user operation may be a slide operation on some feathers.

In this embodiment of this application, the first wallpaper may further have more styles, and the first wallpapers of different styles may further have more states. The foregoing styles and states are merely examples for description. This is not limited.

Further, the electronic device may further display the first wallpaper in a third state on the back screen again in response to a user operation when displaying the first wallpaper in the second state on the back screen. For related descriptions of the first wallpaper in the third state, refer to the foregoing content. Details are not described herein.

Optionally, the electronic device may further detect ambient light, and display the first wallpaper in the second state on the back screen. For example, the style of the first wallpaper may be a chameleon style. After switching to the screen-locked and screen-off state, the electronic device immediately displays the first wallpaper in the first state, where the first wallpaper in the first state displays a chameleon picture with natural skin colors. Then, the electronic device detects that the current ambient light is yellow light, and displays the first wallpaper in the second state, where the first wallpaper in the second state displays a yellow chameleon picture. Further, when detecting that the color of the ambient light changes, the electronic device may further display the first wallpaper in the third state on the back screen.

Optionally, the electronic device may further detect that the posture of the electronic device changes, and display the first wallpaper in the second state on the back screen. For example, the style of the first wallpaper may be a water flow style or a multi-ball style. After switching to the screen-locked and screen-off state, the electronic device immediately displays the first wallpaper in the first state, where the first wallpaper in the first state displays a water flow or a plurality of small balls accumulated at the lower part of the back screen due to gravity in a simulated real state. Then the electronic device detects that the posture of the electronic device changes. For example, the electronic device swings left and right as the user walks, and displays the first wallpaper in the second state. The first wallpaper in the second state displays the water flow or the plurality of small balls swinging as the electronic device swings left and right in a simulated real state. For example, when the electronic device swings to the left, the water flow or the plurality of small balls in the first wallpaper accumulate toward the lower left of the back screen; or when the electronic device swings to the right, the water flow or the plurality of small balls in the first wallpaper accumulate toward the lower right of the back screen.

It should be noted that, the process in which the back screen of the electronic device switches from displaying the first wallpaper in the first state to displaying the first wallpaper in the second state is a gradually changed process, rather than a sudden change process. The user may observe that the first wallpaper is gradually switched from the first state or the second state.

**Optionally, in S605, when the first wallpaper includes a first icon, the electronic device receives a tap operation on the first icon, and displays a first prompt box, where information included in the first prompt box is provided by an application indicated by the first icon.**

After performing S603 or S604, the electronic device may perform S605.

In some implementations, the electronic device stores first wallpapers of a plurality of styles including icons, for example, the first wallpaper in the wallet style. In this embodiment of this application, other styles may also include icons. This is not limited.

For example, the first wallpaper of the wallet style may include but is not limited to: an icon indicting an add-to-favorites function in a system application; an icon indicting a social application; an icon indicating a camera application; an icon indicating a clock application; an icon indicating a sports application; an icon indicating a music application; and the like. In response to a user operation, the electronic device may further change the icons included in the first wallpaper.

For example, when the first icon is an icon indicating a social application, the first prompt box may include: a chat box or message prompt information; when the first icon is an icon indicating a camera application, the first prompt box may include: a most recently shot photo; when the first icon is an icon indicating a clock application, the first prompt box may include: time and date information; when the first icon is an icon indicating a sports application, the first prompt box may include: exercise step information; and when the first icon is an icon indicating a music application, the first prompt box may include: a name of a song currently played and singer's name information.

In this embodiment of this application, the forgoing first icon is merely an example for description, and the first icon may further indicate more applications. This is not limited.

In a possible implementation, after displaying the first prompt box, the electronic device may not display the first prompt box in response to a tap operation on an area that is other than icons and that is in the first wallpaper; and may not display the first prompt box in response to a tap operation on a second icon, and display a second prompt box at the same time, where information included in the second prompt box is provided by an application indicated by the second icon.

**Optionally, in S606, the electronic device receives a tap operation on the first prompt box, and displays a first user interface, where the first user interface belongs to an application indicated by the first icon.**

After performing S605, the electronic device may perform S606.

In some implementations, if the electronic device sets a screen lock password, the electronic device may display a screen lock wallpaper after receiving the tap operation on the first prompt box. Subsequently, the electronic device may display the first user interface after receiving an unlock operation. The unlock operation may include but is not limited to: a touch operation on a specific area (such as a fingerprint recognition area), a face unlock operation facing the camera, an operation of entering a password (such as an alphabetic and/or numeric password or a graphic password), and the like.

Specifically, the electronic device receives a tap operation or a double tap operation on the first prompt box, displays the screen lock wallpaper on the main screen, and displays the screen lock wallpaper on the back screen or makes the back screen black. Subsequently, the electronic device may display the first user interface in response to the unlock operation.

For example, when the first icon is the icon indicating the social application, the first user interface displays the chat box included in the first prompt box; when the first icon is the icon indicating the camera application, the first user interface displays the photo included in the first prompt box; when the first icon is the icon indicating the clock application, the first user interface displays the time and date information included in the first prompt box; when the first icon is the icon indicating the sports application, the first user interface displays the exercise step information included in the first prompt box; and when the first icon is the icon indicating the music application, the first user interface displays the song name and the singer's name information included in the first prompt box.

In this embodiment of this application, the first user interface is merely an example for description, and the first user interface may alternatively be another user interface of an application to which the first icon belongs. This is not limited.

**Optionally, in S607, the electronic device switches from the screen-locked and screen-off state to the screen-locked and screen-on state, and displays the screen lock wallpaper on the back screen.**

After performing S602 or S603 or S604 or S605, the electronic device performs S607.

In some implementations, after performing S602, the electronic device may perform S607. Specifically, once switching to the screen-locked and screen-off state, the electronic device immediately responds to the screen-on operation. The electronic device may also switch from the screen-locked and screen-off state to the screen-locked and screen-on state when the first wallpaper is not displayed, and display the screen lock wallpaper on the back screen. The screen lock wallpaper is different from the foregoing interactive wallpaper. The screen lock wallpaper may be a wallpaper displayed by the electronic device in the screen-locked and screen-on state. It should be noted that, when a display function of the screen lock wallpaper of the back screen of the electronic device is enabled, the back screen may display the screen lock wallpaper. Otherwise, the back screen is black.

In some implementations, after performing S603, the electronic device may perform S607. Specifically, when displaying the first wallpaper in the first state on the back screen, the electronic device may switch from the screen-locked and screen-off state to the screen-locked and screen-on state in response to the screen-on operation, and display the screen lock wallpaper on the back screen. Specifically, the electronic device may display the screen lock wallpaper on the main screen in response to a double tap operation on an area that is other than icons and that is in the first wallpaper, and display the screen lock wallpaper on the back screen or make the back screen black. Subsequently, in response to the unlock operation, the electronic device may display a user interface displayed by the electronic device before the screen is locked

In some implementations, after performing S604, the electronic device may perform S607. Specifically, when displaying the first wallpaper in the second state on the back screen, the electronic device may switch from the screen-locked and screen-off state to the screen-locked and screen-on state in response to the screen-on operation, and display the screen lock wallpaper on the back screen. For details, refer to the foregoing process of performing S603 by the electronic device. Details are not described herein.

Optionally, after duration in which the first wallpaper is displayed exceeds preset duration and when the back screen is displayed black, the electronic device may switch from the screen-locked and screen-off state to the screen-locked and screen-on state in response to the screen-on operation, and display the screen lock wallpaper on the back screen.

In some implementations, after performing S605, the electronic device may perform S607. Specifically, when displaying the first prompt box on the back screen, the electronic device may switch from the screen-locked and screen-off state to the screen-locked and screen-on state in response to the screen-on operation, and display the screen lock wallpaper on the back screen.

In addition to the foregoing method procedure in which the interactive wallpaper is displayed on the back screen in FIG. 6, in a possible implementation, the electronic device may further set to display the interactive wallpaper on the main screen. At a same time point, the electronic device may display interactive wallpapers of a same style on the main screen and the back screen in response to a user operation; and the electronic device may also display interactive wallpapers of different styles on the main screen and the back screen in response to a user operation. Further, the electronic device may display the interactive wallpaper only on the main screen in response to a user operation. This is not limited.

In the foregoing method, various interactive wallpapers may be disposed, to fully meet personalized requirements of users. In addition, an electronic device in a screen-locked and screen-off state may also be enabled to display an interactive wallpaper, to achieve more aesthetic affect. In addition, the user may also operate the interactive wallpaper and observe a change of the interactive wallpaper, making the process of using the electronic device more interesting for the user.

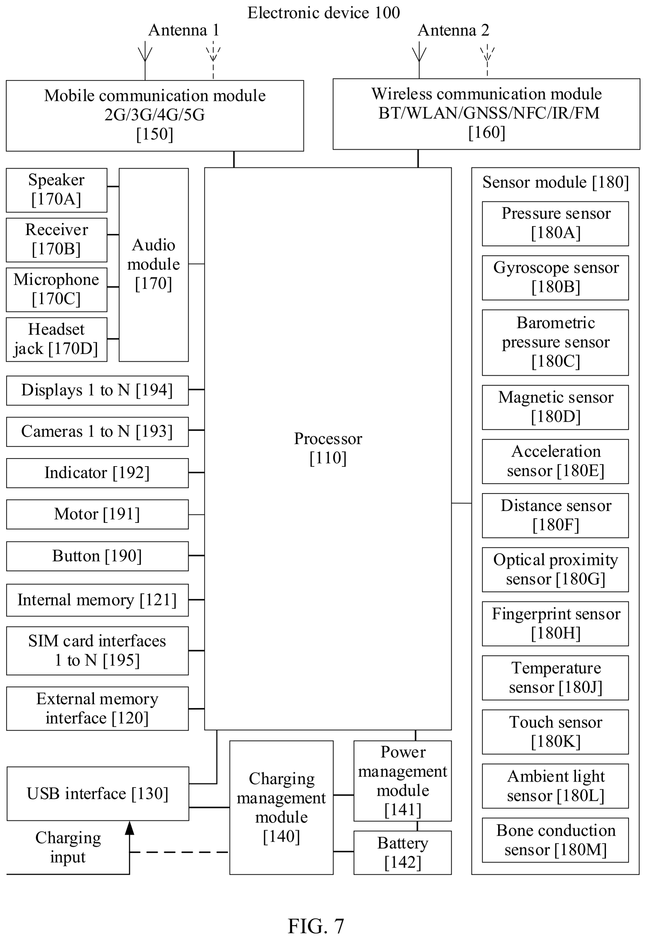

FIG. 7 is a diagram of a structure of the electronic device 100.

The electronic device 100 may be a portable terminal device equipped with iOS^{®}, Android^{®}, Microsoft^{®}, harmony^{®} or another operating system. The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle, an onboard device, a smart home device, and/or a smart city device. In addition, the electronic device 100 may further include a non-portable terminal device such as a laptop (laptop) having a touch-sensitive surface or a touch panel or a desktop computer having a touch-sensitive surface or a touch panel, and the like. A specific type of the electronic device is not specially limited in this embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory 110 may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used for audio communication, to sample, quantize, and encode an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, a MIPI interface, or the like.

The USB interface 130 is an interface that conforms to a USB standard specification, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device. The USB interface 130 may also be configured to connect to a headset, to play audio through the headset. The interface may be further configured to connect to another electronic device such as an AR device.

It may be understood that the interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communications bands. Different antennas may be further reused, to improve antenna utilization. For example, the antenna 1 may be reused as a diversity antenna of a wireless local area network. In some other embodiments, an antenna may be used in combination with a tuning switch.

The mobile communication module 150 may provide a wireless communication solution that is applied to the electronic device 100 and that includes 2G/3G/4G/5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area networks (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 implements a display function through the GPU, the display 194, the application processor, and the like. The GPU is an image processing microprocessor and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diodes (quantum dot light emitting diodes, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and a color of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The internal memory 121 may include one or more random access memories (random access memory, RAM), and one or more non-volatile memories (non-volatile memory, NVM).

The random access memory may include a static random access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as a DDR5 SDRAM), or the like. The non-volatile memory may include a magnetic disk storage device and a flash memory (flash memory).

The flash memory may be divided into NOR FLASH, NAND FLASH, 3D NAND FLASH, and the like according to an operation principle, or may be divided into a single-level cell (single-level cell, SLC), a multi-level cell (multi-level cell, MLC), a triple-level cell (triple-level cell, TLC), a quad-level cell (quad-level cell, QLC), and the like according to an electrical potential level of a storage unit, or may be divided into a universal flash storage (universal flash storage, UFS), an embedded multimedia card, (embedded multimedia Card, eMMC), and the like according to a storage specification.

The random access memory may be directly read and written by the processor 110, may be configured to store executable programs (for example, machine instructions) of an operating system or another running program, and may be configured to store data of a user and an application, and the like.

The non-volatile memory may also store executable programs, data of the user and the application, and the like, and may be loaded into the random access memory in advance, to be directly read and written by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to acquire a sound signal and further implement a noise reduction function. In some other embodiments, three, four, or more microphones 170C may alternatively be disposed in the electronic device 100, to acquire a sound signal, reduce noise, identify a sound source, implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations performed at a same touch position but having different touch operation intensities may correspond to different operation instructions. For example, when a touch operation whose touch operation intensity is less than a first pressure threshold is performed on an icon of the application Messages, an instruction for viewing a short message service message is executed. When a touch operation whose touch operation intensity is greater than or equal to the first pressure threshold is performed on the icon of the application Messages, an instruction for creating a new short message service message is executed.

The gyroscope sensor 180B may be configured to determine a motion posture of the electronic device 100. In some embodiments, an angular velocity of the electronic device 100 around three axes (that is, axes x, y, and z) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be configured to: navigate and sense a game scene.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip machine, the electronic device 100 may detect opening and closing of a flip based on the magnetic sensor 180D. Further, a feature such as automatic unlocking upon flipping is set based on a detected opening or closing state of the leather case or a detected opening or closing state of the flip.

The acceleration sensor 180E may detect magnitudes of accelerations of the electronic device 100 in various directions (generally three axes). When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The distance sensor 180F is configured to measure a distance. The electronic device 100 may measure a distance in an infrared manner or a laser manner. In some embodiments, in a shooting scenario, the electronic device 100 may perform ranging by using the distance sensor 180F, to implement fast focusing.

The optical proximity sensor 180G may include, for example, a light-emitting diode (LED) and an optical detector such as a photodiode. The light-emitting diode may be an infrared light-emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically perform screen-off for power saving. The optical proximity sensor 180G may also be used for automatic screen unlocking and locking in a leather case mode or a pocket mode.

The ambient light sensor 180L is configured to sense ambient light brightness. The electronic device 100 may adaptively adjust brightness of the display 194 based on the sensed brightness of the ambient light. The ambient light sensor 180L may be further configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may implement, by using an acquired fingerprint characteristic, fingerprint unlocking, accessing an application lock, fingerprint photographing, answering an incoming call by using a fingerprint, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142, to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100, and at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also come into contact with a human pulse to receive a blood pressure beating signal. In some embodiments, the bone conduction sensor 180M may alternatively be disposed in a headset, to form a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to user settings and function control of the electronic device 100.

The motor 191 may generate a vibration prompt. The motor 191 may be configured to provide an incoming call vibration prompt, or may be configured to provide a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may indicate a charging status and a power level change, or may indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be inserted into a same SIM card interface 195 at the same time. The plurality of cards may be of a same type or of different types. The SIM card interface 195 is also compatible with different types of SIM cards. The SIM card interface 195 is also compatible with an external storage card. The electronic device 100 interacts with a network through the SIM card, to implement functions such as call and data communication. In an implementation, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In an embodiment of the present invention, a software structure of the electronic device 100 is described by using an Android system with a layered architecture as an example.

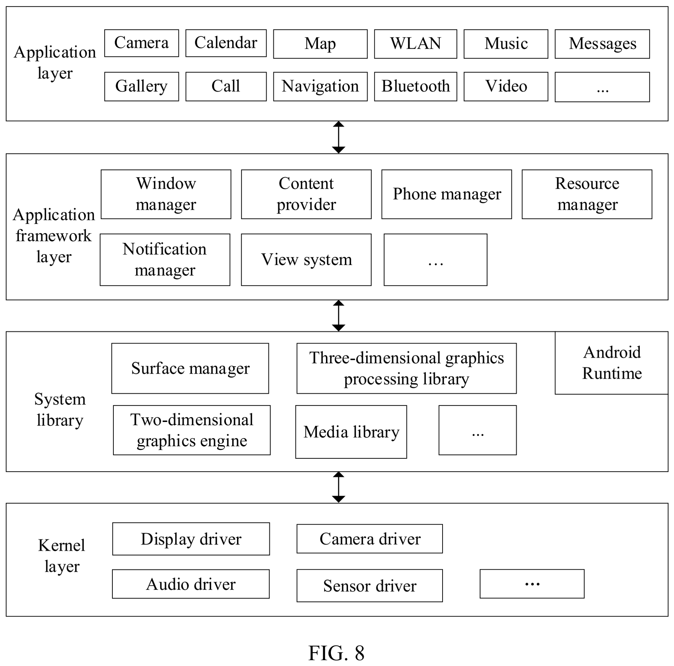

FIG. 8 is a block diagram of a software structure of an electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android Runtime (Android runtime) and a system library, and a kernel layer from top to bottom.

The application layer may include a series of application packages.

As shown in FIG. 8, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 8, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessible to an application. The data may include a video, an image, audio, calls made and answered, a browse history and a bookmark, a personal address book, and the like.

The view system includes visual controls such as a text display control and a picture display control. The view system may be configured to construct an application. A display interface may include one or more views. For example, a display interface including a message notification icon may include a text display view and a picture display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display, in the status bar, notification information, which may be used for conveying a notification-type message that may automatically disappear after a short stay without user interaction. For example, the notification manager is configured to: notify download completion, give a message notification, and the like. The notification manager may alternatively be a notification that appears in a top status bar of the system in a form of a chart or scroll bar text, for example, a notification of an application running on the background or a notification that appears on the screen in a form of a dialog window. For example, text information is displayed in a status bar, a notification sound is given, the electronic device vibrates, or an indicator light blinks.

The Android Runtime includes a core library and a virtual machine. The Android runtime is responsible for scheduling and management of the Android system.

The core library includes two parts: a function that needs to be called in java language and a core library of Android.

The application program layer and the application program framework layer run in the virtual machine. The virtual machine executes java files at the application program layer and the application program framework layer as binary files. The virtual machine is configured to execute functions such as object life cycle management, stack management, thread management, security and exception management, and garbage collection.

The system library may include a plurality of functional modules. for example, a surface manager (surface manager), media libraries (Media Libraries), a three-dimensional graphics processing library (for example, an OpenGL ES), a 2D graphics engine (for example, an SGL), and the like.

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes working procedures of software and hardware of the electronic device 100 by using examples with reference to a photo capture scenario.

When the touch sensor 180K receives a touch operation, a corresponding hardware interruption is sent to the kernel layer. The kernel layer processes the touch operation into an original input event (including information such as coordinates of touch and a timestamp of the touch operation). The original input event is stored at the kernel layer. The application framework layer obtains the original input event from the kernel layer, and identifies a control corresponding to the input event. Using an example in which the touch operation is a touch tapping operation, and a control corresponding to the tapping operation is a control of an icon of the camera application, the camera application invokes an interface of the application framework layer, and the camera application is started, so that a camera driver is started by invoking the kernel layer, and a static image or a video is captured by using the camera 193.

The implementations of this application may be randomly combined to achieve different technical effects.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, wireless, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments may be implemented by a computer program instructing related hardware. The program may be stored in the computer-readable storage medium. When the program is executed, the procedures in the foregoing method embodiments may be included. The foregoing storage medium includes any medium that can store program code, such as a ROM, a random access memory RAM, a magnetic disk, or an optical disc.

In conclusion, the foregoing is merely embodiments of the technical solution of the present invention, but is not intended to limit the protection scope of the present invention. Any modification, equivalent replacement, or improvement made according to the disclosure of the present invention shall fall within the protection scope of the present invention.

## Claims

1. A method for displaying a wallpaper, applied to an electronic device, wherein the electronic device comprises a display, the display comprises a main screen and a back screen, the main screen is connected to the back screen by using a folding component, and the method comprises: when a first function is enabled and the electronic device is in a folded state and when the electronic device is detected to be screen-off, displaying a first wallpaper on the back screen, wherein the first wallpaper comprises a first element in a first form, and both the main screen and the back screen face outside of the electronic device in the folded state; and
when a first operation on the back screen is detected, switching the first element in the first wallpaper from the first form to a second form.

2. The method according to claim 1, wherein a form of the first element comprises any one or more of the following: a position, a size, a color, a shape, and a movement state.

3. The method according to claim 2, wherein the method further comprises:
after first duration, controlling, by the electronic device, the back screen to be black, wherein
the first duration is a sum of duration in which the first wallpaper comprising the first element in the first form is displayed and duration in which the first wallpaper comprising the first element in the second form is displayed, or the first duration is the duration in which the first wallpaper comprising the first element in the first form is displayed.

4. The method according to any one of claims 1 to 3, wherein after switching the first element in the first wallpaper from the first form to the second form, the method further comprises:
when a third operation on the back screen is detected, switching the first element in the first wallpaper from the second form to a third form.

5. The method according to any one of claims 1 to 4, wherein the first wallpaper further comprises a first icon, and after displaying the first wallpaper on the back screen, the method further comprises:
detecting a second operation on the first icon; and
displaying a first prompt box on the back screen, wherein information comprised in the first prompt box is provided by an application indicated by the first icon.

6. The method according to claim 5, wherein the application indicated by the first icon is a social application, and the information comprised in the first prompt box comprises one or more of the following: chat content and a chat participant name; or
the application indicated by the first icon is a clock application, and the information comprised in the first prompt box comprises one or more of the following: clock information and date information; or
the application indicated by the first icon is a music application, and the information comprised in the first prompt box comprises one or more of the following: song information, singer information, a playback control, and a song switching control.

7. The method according to claim 6, wherein the first icon comprised in the first wallpaper is set by a user or the electronic device.

8. The method according to any one of claims 5 to 7, wherein after displaying the first prompt box, the method further comprises:
when an operation on the first prompt box is detected, displaying a first lock screen interface on the main screen, and displaying a second lock screen interface on the back screen or controlling the back screen to be black; and
when an unlock operation is detected on the main screen, displaying a first user interface on the main screen, wherein the first user interface belongs to the application indicated by the first icon.

9. The method according to any one of claims 5 to 7, wherein the method further comprises:
when a double tap operation on an area that is other than icons and prompt boxes and that is on the back screen is detected, displaying a first lock screen interface on the main screen, and displaying a second lock screen interface on the back screen, or controlling, by the electronic device, the back screen to be black; and
when an unlock operation is detected on the main screen, displaying a second user interface on the main screen, wherein the second user interface is a user interface displayed before the electronic device is detected to be screen-locked and screen-off.

10. The method according to any one of claims 5 to 7, wherein the first wallpaper further comprises a second icon, and after displaying the first prompt box, the method further comprises:
when a tap operation on the second icon is detected, stopping displaying the first prompt box; and
displaying a second prompt box, wherein information comprised in the second prompt box is provided by an application indicated by the second icon.

11. The method according to any one of claims 5 to 7, wherein after displaying the first prompt box, the method further comprises:
when an operation on an area that is other than icons and that is on the back screen is detected, stopping displaying the first prompt box.

12. The method according to any one of claims 1 to 11, wherein when the electronic device is in the folded state and before the electronic device is detected to be screen-off, the method further comprises:
when the electronic device is detected to be unlocked and screen-on, displaying a third user interface on the main screen;
detecting a screen lock operation; and
when the electronic device is detected to be screen-locked and screen-on, displaying the first lock screen interface on the main screen, and displaying the second lock screen interface on the back screen, or controlling, by the electronic device, the back screen to be black.

13. The method according to any one of claims 1 to 12, wherein the method further comprises:
when the electronic device is detected to be screen-off, displaying a second wallpaper on the back screen, wherein the second wallpaper comprises a second element of a first color; and
when ambient light is detected to be of a second color, switching the second element in the second wallpaper from the first color to the second color.

14. The method according to any one of claims 1 to 13, wherein after displaying the second wallpaper in the second state on the back screen, the method further comprises:
when the electronic device is detected to be screen-off, displaying a third wallpaper on the back screen, wherein the third wallpaper comprises a third element located at a first position; and
when a posture of the electronic device is detected to change, switching the third element in the third wallpaper from the first position to a second position.

15. The method according to any one of claims 1 to 14, wherein when the first wallpaper is displayed on the back screen, the method further comprises:
displaying the first wallpaper or a fourth wallpaper on the main screen.

16. The method according to any one of claims 1 to 15, wherein a desktop of the electronic device comprises a first card, the first card comprises the first control, and the method further comprises:
when the electronic device is in the folded state, turning off, by the electronic device, the screen in response to an operation on the first control, and displaying the first wallpaper on the back screen.

17. The method according to claim 16, wherein after turning off, by the electronic device, the screen in response to the operation on the first control, and displaying the first wallpaper on the back screen, the method further comprises:
when the first function is disabled and the electronic device is in the folded state and when the electronic device is detected to be screen-off, skipping displaying, by the electronic device, the first wallpaper on the back screen; and
when the first function is enabled and the electronic device is in the folded state and when the electronic device is detected to be screen-off, displaying, by the electronic device, the first wallpaper on the back screen.

18. The method according to claim 1 or 2, wherein after displaying the first wallpaper on the back screen, the method further comprises:
when a second function is enabled and after first duration, stopping displaying, by the electronic device, the first wallpaper on the back screen, and displaying content corresponding to the second function on the back screen or the main screen; and
when the second function is disabled and after first the duration, stopping displaying, by the electronic device, the first wallpaper on the back screen, and controlling the back screen to be black.

19. The method according to any one of claims 1 to 18, wherein the method further comprises:
when the electronic device is in an unfolded state and when the electronic device is detected to be screen-off, skipping displaying the first wallpaper on the back screen, wherein the main screen and the back screen face a same direction in the unfolded state.

20. An electronic device, comprising: one or more processors, and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 19.

21. A computer-readable storage medium, wherein the computer-readable storage medium comprises a computer program, the computer program comprises program instructions, and when the program instructions are run on an electronic device, the electronic device is enabled to perform the method according to any one of claims 1 to 19.
